# EUROPEAN PATENT APPLICATION

(11) **EP 4 149 162 A1**
(43) Date of publication of application: **15.03.2023**
(21) Application number: 21809637.8
(22) Date of filing: 13.05.2021
(51) Int. Cl.: H04W 36/00

(54) **COMMUNICATION METHOD AND APPARATUS**

(30) Priority: 21.05.2020 CN 202010437690
(71) Applicant: Huawei Technologies Co., Ltd., Shenzhen, Guangdong 518129 (CN)
(72) Inventor: YAN, Le, Shenzhen, Guangdong 518129 (CN); GENG, Tingting, Shenzhen, Guangdong 518129 (CN)
(74) Representative: Maiwald GmbH
(86) International application number: PCT/CN2021/093513
(87) International publication number: WO 2021/233191

(57) **Abstract**

A communication method and apparatus are provided. The method includes: In an inter-RAT handover scenario, after a terminal device fails to hand over in a process of attempting to hand over from a source network device to a target network device, the terminal device may generate and send a first report to a first network device, where the first report includes a container that includes at least one piece of information related to the handover failure, and the container uses a coding format corresponding to a communication standard of the source network device. Because the information that is recorded by the terminal device and that is related to the handover failure is sent to the source network device, the coding format used by the container that includes the information related to the handover failure and that is included in the first report is consistent with the communication standard of the source network device, so that after receiving the container, the source network device can conveniently and quickly parse out the information that is related to the handover failure and that is included in the container. Therefore, implementation complexity of the source network device is effectively reduced, and network operation efficiency is improved.

## Description

### CROSS-REFERENCE TO RELATED APPLICATIONS

This application claims priority to Chinese Patent Application No. 202010437690.2, filed with the China National Intellectual Property Administration on May 21, 2020 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

To avoid a connection failure caused by improper configuration of a handover parameter of a network device, a mobility robustness optimization (mobility robustness optimization, MRO) mechanism is introduced to a long term evolution (long term evolution, LTE) communication system and a new radio (new radio, NR) communication system. In the MRO mechanism, a terminal device records and reports a parameter in a mobility failure process to a network, so that the network can identify configuration information of a mobility-related parameter, to optimize the mobility-related parameter in time and improve a handover success rate of the terminal device.

In a conventional technology, when a terminal device performs handover between intra-RAT network devices, because only one communication standard needs to be considered, a coding format used for information in a report reported by the terminal device is consistent with a communication standard of the network device. However, in an inter-RAT or inter-system handover scenario, because at least two communication standards or two communication systems are involved, currently, there is no clear solution to which a specific coding format should be used for the information in the report reported by the terminal device. If the coding format is set improperly, implementation complexity of a report receiving node is increased, and network operation efficiency is reduced.

### SUMMARY

A communication method and apparatus in embodiments of this application are used to provide a mechanism for coding and reporting a report of a related parameter when a terminal device fails to perform handover between inter-RAT network devices, to reduce implementation complexity of a report receiving node and improve network operation efficiency.

According to a first aspect, an embodiment of this application provides a communication method. The method may be performed by a terminal device, or may be performed by a component (for example, a chip or a circuit) configured in a terminal device. In the following descriptions of this application, an example in which the terminal device performs the method is used for description.

The method may include: A terminal device fails to hand over in a process of attempting to hand over from a source network device to a target network device, where the source network device and the target network device are network devices using different communication standards; the terminal device generates a first report, where the first report includes a container that includes at least one piece of information related to the handover failure, and the container uses a coding format corresponding to a communication standard of the source network device; and the terminal device sends the first report to a first network device.

In this embodiment of this application, in an inter-RAT handover scenario in which a handover failure occurs in a handover process of the terminal device, the information that is related to the handover failure and that is recorded by the terminal device is sent to the source network device. Because the coding format used by the container that includes the at least one piece of information related to the handover failure and that is included in the first report is consistent with the communication standard of the source network device, after receiving the container, the source network device can conveniently and quickly parse out the information that is related to the handover failure and that is included in the container. Therefore, implementation complexity of the source network device is effectively reduced, network operation efficiency is improved, and a handover success rate of the terminal device is improved.

In a possible design of the first aspect, the first report further includes first information, and the first information indicates that the first report is a report for an inter-RAT handover scenario.

In this embodiment of this application, the first information is carried in the first report, to indicate that current handover belongs to the inter-RAT handover scenario, so that a network optimizes a mobility-related parameter for the inter-RAT handover scenario.

In a possible design of the first aspect, the first report further includes second information, and the second information indicates that the first report is a report for an inter-system handover scenario or a report for an intra-system handover scenario.

In this embodiment of this application, the second information is carried in the first report, to indicate that the current handover belongs to the inter-system handover scenario or the intra-system handover scenario, so that the network optimizes a mobility-related parameter for the inter-system handover scenario or the intra-system handover scenario.

In a possible design of the first aspect, the method may further include: The terminal device sends first indication information to the first network device, where the first indication information indicates that the terminal device records the first report; and the terminal device receives second indication information from the first network device, where the second indication information indicates the terminal device to report the first report.

In this embodiment of this application, the terminal device may report the first report after receiving an indication from the first network device. Therefore, a network control function can be effectively enhanced, and uplink congestion caused by disordered reporting of a large quantity of reports can be avoided.

According to a second aspect, an embodiment of this application provides a communication method. The method may be performed by a first network device, or may be performed by a component (for example, a chip or a circuit) configured in a first network device. The first network device may be a source network device, may be a target network device, or may be another network device different from the source network device and the target network device. In the following descriptions of this application, an example in which the first network device performs the method is used for description.

The method may include: A first network device receives a first report from a terminal device, where the first report includes a container that includes at least one piece of information related to a handover failure, the container uses a coding format corresponding to a communication standard of a source network device, the handover failure is a handover failure from the source network device to a target network device, and the source network device and the target network device are network devices using different communication standards; and the first network device processes the first report.

In this embodiment of this application, if the first network device and the source network device are a same network device, the first network device may directly process the first report. If the first network device and the source network device are different network devices, the first network device may forward the container in the first report to the source network device. Because the coding format used by the container in the first report is consistent with the communication standard of the source network device, after receiving the container, the source network device can conveniently and quickly parse out the information that is related to the handover failure and that is included in the container. Therefore, implementation complexity of the source network device is effectively reduced, and network operation efficiency is improved.

In a possible design of the second aspect, that the first network device processes the first report may include: The first network device obtains the container in the first report; and the first network device sends a second report to the source network device, where the second report includes the container.

In a possible design of the second aspect, the first report further includes first information, and the first information indicates that the first report is a report for an inter-RAT handover scenario; and/or the second report further includes third information, and the third information indicates that the second report is a report for an inter-RAT handover scenario.

In a possible design of the second aspect, the first report further includes second information, and the second information indicates that the first report is a report for an inter-system handover scenario or a report for an intra-system handover scenario; and/or the second report further includes fourth information, and the fourth information indicates that the second report is a report for an inter-system handover scenario or a report for an intra-system handover scenario.

In a possible design of the second aspect, the method may further include: The first network device receives first indication information from the terminal device, where the first indication information indicates that the terminal device records the first report; and the first network device sends second indication information to the terminal device, where the second indication information indicates the terminal device to report the first report.

According to a third aspect, an embodiment of this application provides a communication method. The method may be performed by a terminal device, or may be performed by a component (for example, a chip or a circuit) configured in a terminal device. In the following descriptions of this application, an example in which the terminal device performs the method is used for description.

The method may include: a radio link failure occurs on a target network device shortly after a terminal device is successfully handed over from a source network device to a target network device, or after a terminal device is connected to a source network device for a period of time, a radio link failure occurs, where the source network device and the target network device are network devices using different communication standards; the terminal device generates a first report, where the first report includes a first container that includes at least one piece of information related to the radio link failure, and the first container uses a coding format corresponding to a communication standard of a network device to which a cell in which the radio link failure occurs belongs; and the terminal device sends the first report to a first network device.

In this embodiment of this application, the network device to which the cell in which the radio link failure occurs belongs may be the target network device or the source network device. In an inter-RAT handover scenario in which the radio link failure occurs between the terminal device and the target network device after the terminal device is successfully handed over to the target network device, the information that is related to the radio link failure and that is recorded by the terminal device is sent to the target network device. In this case, because the coding format of the first container in the first report is consistent with a communication standard of the target network device, after receiving the first report, the first network device can directly send the first container to the target network device. In this way, after receiving the first container, the target network device can conveniently and quickly parse out the information that is related to the radio link failure of the terminal device and that is included in the first container. Therefore, implementation complexity of the target network device is reduced, network operation efficiency is improved, and a handover success rate of the terminal device is improved.

In an inter-RAT handover scenario in which a connection failure occurs between the terminal device and the source network device before the terminal device receives a handover message, the information that is related to the radio link failure and that is recorded by the terminal device is sent to the source network device. In this case, because the coding format of the first container in the first report is consistent with a communication standard of the source network device, after receiving the first report, the first network device may directly send the first container to the source network device. In this way, after receiving the first container, the source network device can conveniently and quickly parse out the information that is related to the radio link failure of the terminal device and that is included in the first container. Therefore, implementation complexity of the source network device is reduced, the network operation efficiency is improved, and the handover success rate of the terminal device is improved.

In a possible design of the third aspect, when the radio link failure occurs on the target network device shortly after the terminal device is successfully handed over from the source network device to the target network device, the network device to which the cell in which the radio link failure occurs belongs is the target network device. The first report further includes a second container that includes the at least one piece of information related to the radio link failure, where the second container uses a coding format corresponding to a communication standard of the source network device.

In this embodiment of this application, in the inter-RAT handover scenario in which the radio link failure occurs between the terminal device and the target network device after the terminal device is successfully handed over to the target network device, after receiving the first container, the target network device further sends the information related to the radio link failure of the terminal device to the source network device. In view of this, the first report includes the second container in the coding format corresponding to the communication standard of the source network device, so that, after receiving the first report, the first network device can send the second container in the first report to the target network device, and then the target network device sends the second container to the source network device. Therefore, the implementation complexity of the source network device is reduced, the network operation efficiency is improved, and the handover success rate of the terminal device is improved.

In a possible design of the third aspect, the first report further includes first information, and the first information indicates that the first report is a report for an inter-RAT handover scenario.

In this embodiment of this application, the first information is carried in the first report, to indicate that current handover belongs to the inter-RAT handover scenario, so that a network optimizes a mobility-related parameter for the inter-RAT handover scenario.

In a possible design of the third aspect, the first report further includes second information, and the second information indicates that the first report is a report for an inter-system handover scenario or a report for an intra-system handover scenario.

In this embodiment of this application, the second information is carried in the first report, to indicate that the current handover belongs to the inter-system handover scenario or the intra-system handover scenario, so that the network optimizes a mobility-related parameter for the inter-system handover scenario or the intra-system handover scenario.

In a possible design of the third aspect, the method may further include: The terminal device sends first indication information to the first network device, where the first indication information indicates that the terminal device records the first report; and the terminal device receives second indication information from the first network device, where the second indication information indicates the terminal device to report the first report.

In this embodiment of this application, the terminal device may report the first report after receiving an indication from the first network device. Therefore, a network control function can be effectively enhanced, and uplink congestion caused by disordered reporting of a large quantity of reports can be avoided.

According to a fourth aspect, an embodiment of this application provides a communication method. The method may be performed by a first network device, or may be performed by a component (for example, a chip or a circuit) configured in a first network device. The first network device may be a source network device, may be a target network device, or may be another network device different from the source network device and the target network device. In the following descriptions of this application, an example in which the first network device performs the method is used for description.

The method may include: The first network device receives a first report from a terminal device, where the first report includes a first container that includes at least one piece of information related to a radio link failure, and the first container uses a coding format corresponding to a communication standard of a network device to which a cell in which the radio link failure occurs belongs; and the first network device sends a second report to the network device to which the cell in which the radio link failure occurs belongs, where the second report includes the first container.

In a possible design of the fourth aspect, when the network device to which the cell in which the radio link failure occurs belongs is the target network device, the first report may further include a second container that includes the at least one piece of information related to the radio link failure, where the second container uses a coding format corresponding to a communication standard of the source network device. The method may further include: The first network device sends the second container to the target network device.

In this embodiment of this application, in an inter-RAT handover scenario in which the radio link failure occurs between the terminal device and the target network device after the terminal device is successfully handed over to the target network device, after receiving the first container, the target network device further sends the information related to the radio link failure of the terminal device to the source network device. In view of this, the first network device may send, to the target network device, the second container that uses the coding format corresponding to the communication standard of the source network device, so that the target network device then sends the second container to the source network device. Therefore, implementation complexity of the source network device is reduced, network operation efficiency is improved, and a handover success rate of the terminal device is improved.

In a possible design of the fourth aspect, the first report further includes first information, and the first information indicates that the first report is a report for an inter-RAT handover scenario; and/or the second report further includes third information, and the third information indicates that the second report is a report for an inter-RAT handover scenario.

In a possible design of the fourth aspect, the first report further includes second information, and the second information indicates that the first report is a report for an inter-system handover scenario or a report for an intra-system handover scenario; and/or the second report further includes fourth information, and the fourth information indicates that the second report is a report for an inter-system handover scenario or a report for an intra-system handover scenario.

In a possible design of the fourth aspect, the method may further include: The first network device receives first indication information from the terminal device, where the first indication information indicates that the terminal device records the first report; and the first network device sends second indication information to the terminal device, where the second indication information indicates the terminal device to report the first report.

According to a fifth aspect, this application provides a communication method. The method may be performed by a target network device, or may be performed by a component (for example, a chip or a circuit) configured in a target network device. In the following descriptions of this application, an example in which the target network device performs the method is used for description.

The method may include: A target network device receives a second report from a first network device, where the second report includes a first container that includes at least one piece of information related to a radio link failure, and the first container uses a coding format corresponding to a communication standard of the target network device; the target network device determines, based on the second report, that handover is too early handover or handover to a wrong cell, and/or determines that a failure type is the radio link failure; and the target network device sends a third report to a source network device, where the third report includes a second container that includes the at least one piece of information related to the radio link failure, the second container uses a coding format corresponding to a communication standard of the source network device, and the source network device and the target network device are network devices using different communication standards.

In this embodiment of this application, in an inter-RAT handover scenario in which the radio link failure occurs between the terminal device and the target network device after the terminal device is successfully handed over to the target network device, a network device to which a cell in which the radio link failure occurs belongs is the target network device, and the information that is related to the radio link failure and that is recorded by the terminal device is sent to the target network device. In this case, because the coding format of the first container in the first report is consistent with the communication standard of the target network device, after receiving the first container, the target network device can conveniently and quickly parse out the information that is related to the radio link failure of the terminal device and that is included in the first container. Therefore, implementation complexity of the target network device is reduced, network operation efficiency is improved, and a handover success rate of the terminal device is improved.

In a possible design of the fifth aspect, the method may further include: The target network device receives the second container from the first network device; or the target network device processes, based on the coding format corresponding to the communication standard of the source network device, the at least one piece of information that is related to the radio link failure and that is included in the first container, to obtain the second container.

In this embodiment of this application, in the inter-RAT handover scenario in which the radio link failure occurs between the terminal device and the target network device after the terminal device is successfully handed over to the target network device, after receiving the first container, the target network device further sends the information related to the radio link failure of the terminal device to the source network device. In view of this, the target network device may send, to the source network device, the second container that uses the coding format corresponding to the communication standard of the source network device. The second container may be received by the target network device, or may be obtained by the target network device by processing the information that is related to the radio link failure of the terminal device and that is obtained from the first container. Therefore, flexibility of the method can be effectively enhanced, implementation complexity of the source network device can be reduced, the network operation efficiency can be improved, and the handover success rate of the terminal device can be improved.

In a possible design of the fifth aspect, the second report further includes third information, and the third information indicates that the second report is a report for an inter-RAT handover scenario; and/or the third report further includes fifth information, and the fifth information indicates that the third report is a report for an inter-RAT handover scenario.

In a possible design of the fifth aspect, the second report further includes fourth information, and the fourth information indicates that the first report is a report for an inter-system handover scenario or a report for an intra-system handover scenario; and/or the third report further includes sixth information, and the sixth information indicates that the third report is a report for an inter-system handover scenario or a report for an intra-system handover scenario.

In a possible design of the fifth aspect, the third report further includes information indicating that the handover is too early handover or handover to a wrong cell.

According to a sixth aspect, an embodiment of this application provides a communication apparatus. The apparatus has a function of implementing the terminal device according to any one of the first aspect or the possible designs of the first aspect, or has a function of implementing the terminal device according to any one of the third aspect or the possible designs of the third aspect. The apparatus may be a terminal device, or may be a chip included in a terminal device.

Alternatively, the communication apparatus may have a function of implementing the first network device according to any one of the second aspect or the possible designs of the second aspect, or have a function of implementing the first network device according to any one of the fourth aspect or the possible designs of the fourth aspect, or have a function of implementing the target network device according to any one of the fifth aspect or the possible designs of the fifth aspect. The apparatus may be a network device, or may be a chip included in a network device.

The function of the communication apparatus may be implemented by hardware, or may be implemented by hardware executing corresponding software. The hardware or the software includes one or more modules, units, or means (means) corresponding to the foregoing function.

In a possible design, a structure of the apparatus includes a processing module and a transceiver module. The processing module is configured to support the apparatus in performing a corresponding function of the terminal device according to any one of the first aspect or the designs of the first aspect, performing a corresponding function of the first network device according to any one of the second aspect or the designs of the second aspect, performing a corresponding function of the terminal device according to any one of the third aspect or the possible designs of the third aspect, performing a corresponding function of the first network device according to any one of the fourth aspect or the possible designs of the fourth aspect, or performing a corresponding function of the target network device according to any one of the fifth aspect or the possible designs of the fifth aspect. The transceiver module is configured to support communication between the apparatus and another communication device. For example, when the apparatus is a terminal device, the apparatus may send a first report to a first network device. The communication apparatus may further include a storage module. The storage module is coupled to the processing module, and stores program instructions and data that are necessary for the apparatus. In an example, the processing module may be a processor, a communication module may be a transceiver, and the storage module may be a memory. The memory may be integrated with the processor, or may be disposed separately from the processor. This is not limited in this application.

In another possible design, a structure of the apparatus includes a processor, and may further include a memory. The processor is coupled to the memory, and may be configured to execute computer program instructions stored in the memory, so that the apparatus performs the method according to any one of the first aspect or the possible designs of the first aspect, performs the method according to any one of the second aspect or the possible designs of the second aspect, performs the method according to any one of the third aspect or the possible designs of the third aspect, performs the method according to any one of the fourth aspect or the possible designs of the fourth aspect, or performs the method according to any one of the fifth aspect or the possible designs of the fifth aspect. Optionally, the apparatus further includes a communication interface, and the processor is coupled to the communication interface. When the apparatus is the network device or the terminal device, the communication interface may be a transceiver or an input/output interface. When the apparatus is the chip included in the network device or the chip included in the terminal device, the communication interface may be an input/output interface of the chip. Optionally, the transceiver may be a transceiver circuit, and the input/output interface may be an input/output circuit.

According to a seventh aspect, an embodiment of this application provides a chip system, including a processor, where the processor is coupled to a memory, and the memory is configured to store a program or instructions; and when the program or the instructions are executed by the processor, the chip system is enabled to implement the method according to any one of the first aspect or the possible designs of the first aspect, implement the method according to any one of the second aspect or the possible designs of the second aspect, implement the method according to any one of the third aspect or the possible designs of the third aspect, implement the method according to any one of the fourth aspect or the possible designs of the fourth aspect, or implement the method according to any one of the fifth aspect or the possible designs of the fifth aspect.

Optionally, the chip system further includes an interface circuit, and the interface circuit is configured to exchange code instructions with the processor.

Optionally, there may be one or more processors in the chip system, and the processor may be implemented by hardware or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed independent of the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

According to an eighth aspect, an embodiment of this application provides a computer-readable storage medium, where the computer-readable storage medium stores a computer program or instructions; and when the computer program or the instructions are executed, a computer is enabled to perform the method according to any one of the first aspect or the possible designs of the first aspect, perform the method according to any one of the second aspect or the possible designs of the second aspect, perform the method according to any one of the third aspect or the possible designs of the third aspect, perform the method according to any one of the fourth aspect or the possible designs of the fourth aspect, or perform the method according to any one of the fifth aspect or the possible designs of the fifth aspect.

According to a ninth aspect, an embodiment of this application provides a computer program product. When a computer reads and executes the computer program product, the computer is enabled to perform the method according to any one of the first aspect or the possible designs of the first aspect, perform the method according to any one of the second aspect or the possible designs of the second aspect, perform the method according to any one of the third aspect or the possible designs of the third aspect, perform the method according to any one of the fourth aspect or the possible designs of the fourth aspect, perform the method according to any one of the fifth aspect or the possible designs of the fifth aspect, or perform the method according to any one of the sixth aspect or the possible designs of the sixth aspect.

According to a tenth aspect, an embodiment of this application provides a communication system. The communication system includes a first network device and at least one terminal device. The first network device may be a source network device, may be a target network device, or may be another network device different from the source network device and the target network device. Optionally, the communication system may further include the source network device and the target network device. Optionally, the communication system may further include a core network device.

### BRIEF DESCRIPTION OF DRAWINGS

FIG. 1 is a schematic diagram of a network architecture of a communication system to which an embodiment of this application is applicable;
FIG. 2a to FIG. 2d are schematic diagrams of several possible handover scenarios according to an embodiment of this application;
FIG. 3 is a schematic flowchart of a communication method according to an embodiment of this application;
FIG. 4a and FIG. 4b are schematic diagrams of two possible implementations of processing a first report by a first network device according to an embodiment of this application;
FIG. 5 is a schematic flowchart of sending a first report by a terminal device according to an embodiment of this application;
FIG. 6 is a schematic flowchart of another communication method according to an embodiment of this application;
FIG. 7a and FIG. 7b are schematic diagrams of two possible implementations in which a first network device sends a second report to a network device to which a cell in which a radio link failure occurs belongs according to an embodiment of this application;
FIG. 8 is a schematic diagram of a specific example (Example 2) according to an embodiment of this application;
FIG. 9 is a schematic diagram of a structure of a communication apparatus according to an embodiment of this application;
FIG. 10 is a schematic diagram of another structure of a communication apparatus according to an embodiment of this application;
FIG. 11 is a schematic diagram of a structure of another communication apparatus according to an embodiment of this application; and
FIG. 12 is a schematic diagram of another structure of another communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The technical solutions in embodiments of this application may be applied to various communication systems, for example, a global system for mobile communication (global system for mobile communication, GSM) system, a code division multiple access (code division multiple access, CDMA) system, a wideband code division multiple access (wideband code division multiple access, WCDMA system), a general packet radio service (general packet radio service, GPRS) system, an LTE system, an LTE frequency division duplex (frequency division duplex, FDD) system, an LTE time division duplex (time division duplex, TDD), a universal mobile telecommunication system (universal mobile telecommunication system, UMTS), a worldwide interoperability for microwave access (worldwide interoperability for microwave access, WIMAX) communication system, a 5th generation (5th generation, 5G) system, an NR system, a communication system for future, or another similar communication system.

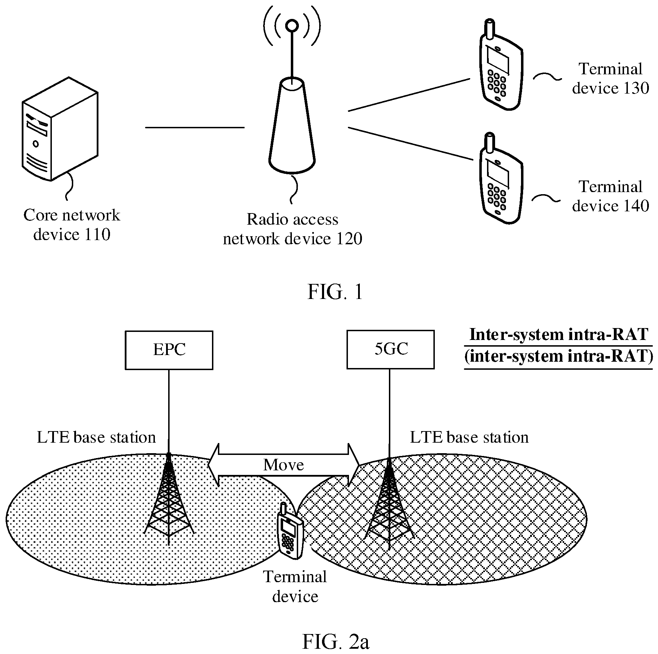

FIG. 1 is a schematic diagram of a network architecture of a communication system to which an embodiment of this application is applicable. The network architecture includes a core network device 110, a radio access network device 120, and at least one terminal device (for example, a terminal device 130 and a terminal device 140 shown in FIG. 1).

The terminal device is connected to the radio access network device in a wireless manner, and the radio access network device is connected to the core network device in a wireless or wired manner. The core network device and the radio access network device may be independent and different physical devices, a function of the core network device and a logical function of the radio access network device may be integrated into a same physical device, or a part of functions of the core network device and a part of functions of the radio access network device may be integrated into one physical device.

It should be understood that the communication system shown in FIG. 1 is only a schematic diagram. The communication system may further include another type of network device, for example, a wireless relay device or a wireless backhaul device, which is not drawn in FIG. 1. Although FIG. 1 shows only one terminal device, it should be understood that quantities of core network devices, radio access network devices, terminal devices, and wireless backhaul devices included in the communication system are not limited in this embodiment of this application.

The radio access network device mentioned in this embodiment of this application may correspond to different devices in different communication systems. For example, the radio access network device corresponds to an access network device, for example, a gNB, in 5G in a 5G system, and corresponds to an access network device, for example, an eNB, in 4G in a 4G system.

Communication between a radio access network device and a terminal device and communication between terminal devices may be performed by using a licensed spectrum (licensed spectrum), may be performed by using an unlicensed spectrum (unlicensed spectrum), or may be performed by using both a licensed spectrum and an unlicensed spectrum. Communication between a radio access network device and a terminal device and communication between terminal devices may be performed by using a spectrum below 6 gigahertz (gigahertz, GHz), by using a spectrum above 6 GHz, or by using both a spectrum below 6 GHz and a spectrum above 6 GHz. A spectrum resource used between a radio access network device and a terminal device is not limited in this embodiment of this application.

This embodiment of this application is applied to a cell handover scenario. The terminal device may be handed over from a source network device to a target network device due to location movement, a service change, a network coverage change, or another reason. The source network device is a network device accessed by the terminal device before the terminal device performs handover or a network device that provides a service for the terminal device before the handover. The target network device is a network device to which the terminal device needs to be handed over, a network device accessed by the terminal device after the terminal device successfully performs handover, or a network device that provides a service for the terminal device after the successful handover. Correspondingly, a source cell is a cell accessed by the terminal device before the terminal device performs handover. The source cell is a cell covered by the source network device, or the source cell is a cell managed by the source network device. A target cell is a cell accessed by the terminal device after the terminal device performs handover. The target cell is a cell covered by the target network device, or the target cell is a cell managed by the target network device.

An existing communication system may support mobility between a plurality of systems or a plurality of standards, for example, inter-system handover (inter-system handover, inter-system HO) and inter-radio access technology handover (inter-radio access technology handover, inter-RAT HO).

Inter-system (inter-system) means different communication systems. For example, 2G, 3G, 4G, 5G, or a future communication system is different communication systems. Generally, a system is determined based on a system to which the core network device belongs. Similarly, intra-system (intra-system) means a same communication system.

Inter-radio access technology (inter-RAT) means different communication standards, to be specific, different radio access technologies (radio access technology, RAT). For example, 2G, 3G, 4G, 5G, or future network standards are different communication standards. Generally, a standard is determined based on a communication standard (namely, a used RAT) to which the access network device belongs. Similarly, intra-radio access technology (intra-RAT) means a same communication standard.

In view of this, in this embodiment of this application, a 4G base station connected to a core network of the 5G system, which is also referred to as an LTE base station or an ng-eNB, is introduced in a 5G scenario, and a corresponding cell may be referred to as an eLTE cell. A 5G base station connected to a core network of the 4G system, which is also referred to as an NR base station or an en-gNB, is introduced in a 4G scenario, and a corresponding cell may be referred to as an eLTE cell.

FIG. 2a to FIG. 2d are schematic diagrams of several possible handover scenarios according to an embodiment of this application. It should be noted that a 5GC shown in the figure means a core network in a 5G system, namely, a 5th generation core (5th generation core, 5GC) network; and an EPC means a core network in a 4G system, namely, an evolved packet core (evolved packet core, EPC) network.

As shown in FIG. 2a, an LTE base station connected to the 4G core network and an LTE base station connected to the 5G core network are in different systems and a same standard. In this way, that a terminal device is handed over from the LTE base station connected to the 4G core network to the LTE base station connected to the 5G core network belongs to an inter-system intra-RAT (inter-system intra-RAT) handover scenario. Similarly, that the terminal device is handed over from the LTE base station connected to the 5G core network to the LTE base station connected to the 4G core network also belongs to the inter-system intra-RAT (inter-system intra-RAT) handover scenario.

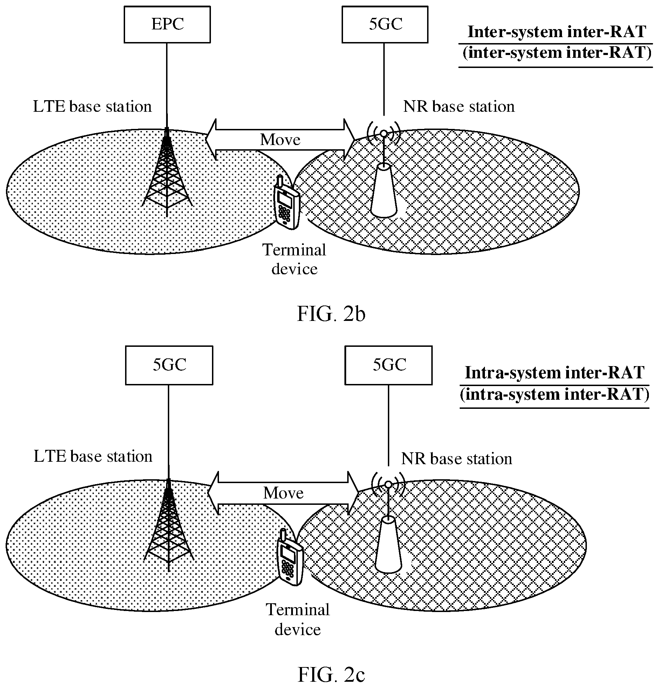

As shown in FIG. 2b, an NR base station connected to the 5G core network and an LTE base station connected to the 4G core network are in different systems and different standards. In this way, that a terminal device is handed over from the NR base station connected to the 5G core network to the LTE base station connected to the 4G core network belongs to an inter-system inter-RAT (inter-system inter-RAT) handover scenario. Similarly, that the terminal device is handed over from the LTE base station connected to the 4G core network to the NR base station connected to the 5G core network also belongs to the inter-system inter-RAT (inter-system inter-RAT) handover scenario.

As shown in FIG. 2c, an LTE base station connected to the 5G core network and an NR base station connected to the 5G core network are in a same system and different standards. In this way, that a terminal device is handed over from the LTE base station connected to the 5G core network to the NR base station connected to the 5G core network belongs to an intra-system inter-RAT (intra-system inter-RAT) handover scenario. Similarly, that the terminal device is handed over from the NR base station connected to the 5G core network to the LTE base station connected to the 5G core network also belongs to the intra-system inter-RAT (intra-system inter-RAT) handover scenario.

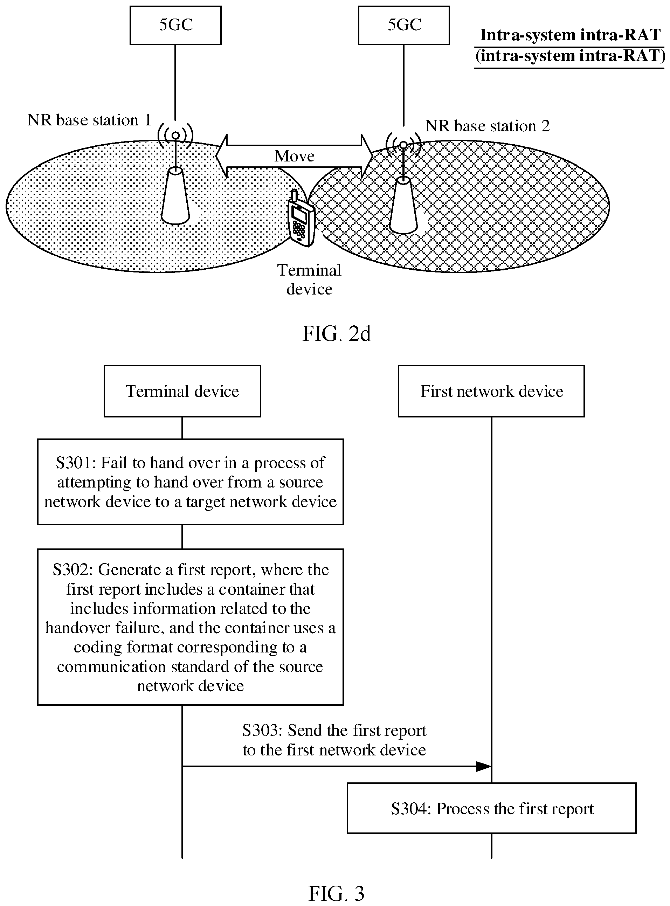

As shown in FIG. 2d, an NR base station 1 connected to the 5G core network and an NR base station 2 connected to the 5G core network are in a same system and a same standard. In this way, that a terminal device is handed over from the NR base station 1 connected to the 5G core network to the NR base station 2 connected to the 5G core network belongs to an intra-system intra-RAT (intra-system intra-RAT) handover scenario. Similarly, that the terminal device is handed over from the NR base station 2 connected to the 5G core network to the NR base station 1 connected to the 5G core network also belongs to the intra-system intra-RAT (intra-system intra-RAT) handover scenario.

It should be understood that, in this embodiment of this application, inter-system handover may also be referred to as inter-system handover or inter-communication-system handover, and the intra-system handover may also be referred to as intra-system handover or intra-communication-system handover. The inter-RAT handover may also be referred to as inter-RAT handover or inter-RAT handover, and the intra-RAT handover may also be referred to as intra-RAT handover. Details are not described below.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The following explains and describes some terms in embodiments of this application, to help a person skilled in the art have a better understanding.

1) A terminal device in embodiments of this application is a device having a wireless transceiver function, and may be deployed on land, where the deployment includes indoor or outdoor, handheld, wearable, or vehicle-mounted deployment, may be deployed on water (for example, on a ship), or may be deployed in air (for example, on aircraft, a balloon, and a satellite). The terminal device may communicate with a core network through a radio access network (radio access network, RAN), and exchange voice and/or data with the RAN. The terminal device may be a mobile phone (mobile phone), a tablet (Pad), a computer with a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment (user equipment, UE), a mobile station, a remote station, or the like. A specific technology, a device form, and a name that are used by the terminal device are not limited in embodiments of this application.

By way of example and not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, smart helmets, or smart jewelry for monitoring physical signs.

The terminal device in embodiments of this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle to implement the method in this application.

2) The radio access network device in embodiments of this application is a device that is in a network and that is configured to connect the terminal device to a wireless network. The radio access network device may be a node in the radio access network, or may be referred to as a base station, or may be referred to as a RAN node. In this application, the radio access network device may be referred to as a network device for short. Unless otherwise specified, all network devices in the following descriptions are radio access network devices.

The network device may include an evolved NodeB (NodeB, eNB, or e-NodeB, evolved NodeB) in a long term evolution (long term evolution, LTE) system or an LTE-advanced (LTE-Advanced, LTE-A) system, such as a conventional macro base station eNB, and a micro base station eNB in a heterogeneous network scenario; may include a next generation NodeB (next generation NodeB, gNB) in a 5th generation (5th generation, 5G) mobile communication technology new radio (new radio, NR) system; may further include a radio network controller (radio network controller, RNC), a NodeB (NodeB, NB), a base station controller (base station controller, BSC), a base transceiver station (base transceiver station, BTS), a transmission reception point (transmission reception point, TRP), a home base NodeB (for example, a home evolved NodeB or a home NodeB, HNB), a baseband unit (baseband unit, BBU), a baseband pool BBU pool, a wireless fidelity (wireless fidelity, Wi-Fi) access point (access point, AP), an integrated access and backhaul (integrated access and backhaul, IAB) node, or the like; or may further include a centralized unit (centralized unit, CU) and/or a distributed unit (distributed unit, DU) in a cloud access network (cloud radio access network, CloudRAN) system. This is not limited in embodiments of this application.

For example, in a network structure, the network device may be a CU node, a DU node, or an access network device including a CU node and a DU node. Further, the CU node may be divided into a control plane (CU-CP) and a user plane (CU-UP). The CU-CP is responsible for control plane functions, and mainly includes radio resource control (radio resource control, RRC) and packet data convergence protocol (packet data convergence protocol, PDCP)-C. The PDCP-C is mainly responsible for encryption and decryption, integrity protection, data transmission, and the like of control plane data. The CU-UP is responsible for user plane functions, and mainly includes a service data adaptation protocol (service data adaptation protocol, SDAP) and a PDCP-U. The SDAP is mainly responsible for processing data of a core network and mapping a flow (flow) to a bearer (bearer). The PDCP-U is mainly responsible for encryption and decryption, integrity protection, header compression, sequence number maintenance, data transmission, and the like of a data plane. The CU-CP may be connected to the CU-UP through an E1 interface. The CU-CP indicates that the CU is connected to a core network through an Ng interface, and is connected to the DU through an F1-C (control plane) interface. The CU-UP is connected to the DU through F1-U (the user plane). Certainly, in another possible implementation, the PDCP-C is also on the CU-UP.

3) It should be noted that the terms "system" and "network" may be used interchangeably in embodiments of this application. "A plurality of' means two or more. In view of this, "a plurality of' may also be understood as "at least two" in embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise stated, ordinal numbers such as "first" and "second" in embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

It may be understood that in embodiments of this application, the terminal device and/or the network device may perform a part or all of the steps in embodiments of this application. These steps or operations are only examples. In embodiments of this application, other operations or variations of various operations may be further performed. In addition, the steps may be performed in a sequence different from a sequence presented in embodiments of this application, and not all the operations in embodiments of this application may be necessarily to be performed.

FIG. 3 is a schematic flowchart of a communication method according to an embodiment of this application. The method includes the following steps.

Step S301: A terminal device fails to hand over in a process of attempting to hand over from a source network device to a target network device, where the source network device and the target network device are network devices using different communication standards.

In this embodiment of this application, that the source network device and the target network device use different communication standards, that is, are inter-RAT, means that the source network device and the target network device use different radio access technologies RATs. For example, the source network device may be an NR base station, and the target network device may be an LTE base station. Alternatively, the source network device may be an LTE base station, and the target network device may be an NR base station. Alternatively, the source network device may be an NR base station, and the target network device may be an NR evolved base station. This is not limited in this embodiment.

Specifically, after receiving a handover message from the source network device, the terminal device attempts to hand over from the source network device to the target network device, but the terminal device fails to hand over to the target network device. For example, a random access process between the terminal device and the target network device fails. The handover message indicates the terminal device to hand over from the source network device to the target network device, or the handover message indicates the terminal device to hand over from a source cell to a target cell. The handover message may also be referred to as a handover command, a reconfiguration message, or another name. This is not limited in this application. For example, the handover message may be MobilityFromEUTRACommand, MobilityFromNRCommand, or another message.

Optionally, after a handover failure occurs in the process in which the terminal device attempts to hand over from the source network device to the target network device, the terminal device may determine that a failure type (or a connection failure type) is the handover failure (handover failure, HOF).

After the handover failure occurs, the terminal device may restore a connection to the source network device or another network device, or in other words, reestablish a connection. For example, the terminal device may reestablish a connection to the source network device or another network device, communication standards used by the another network device and the source network device may be the same or different, and communication systems to which the another network device and the source network device belong may be the same or different. A reestablishment cell may be the source cell, or another cell different from the source cell and the target cell. This is not limited in this application.

Step S302: The terminal device generates a first report, where the first report includes a container (container) that includes at least one piece of information related to the handover failure, and the container uses a coding format corresponding to a communication standard of the source network device.

A part of information in the first report may be recorded/generated by the terminal device when the failure occurs, for example, cell information of a failed cell, the connection failure type, cell information of the source cell, cell information of a cell in which connection reestablishment or connection restoration is initiated after a connection failure, and connection failure time. Alternatively, a part of information, for example, time since failure, in the first report may be recorded/generated by the terminal device when the terminal device reports information. Specifically, for the cell information of the failed cell, the connection failure type, the cell information of the source cell, the cell information of the cell in which connection reestablishment or connection restoration is initiated after the connection failure, the connection failure time, the time since failure, and the like, refer to the following descriptions.

The first report may also be referred to as a radio link failure (radio link failure, RLF) report, a connection failure report, a first message, or another name. This is not limited in this application. The container that includes the at least one piece of information related to the handover failure may also be referred to as a handover failure container. The container may be understood as a carrier of encapsulation information or a data structure of encapsulation information.

In this embodiment of this application, after the terminal device receives the handover message, the handover failure occurs in the process in which the terminal device attempts to hand over from the source network device to the target network device, that is, the failure type is an "HOF". Therefore, when recording/storing information, the terminal device determines that the container uses the coding format corresponding to the communication standard of the source network device. For example, when the source network device is an NR base station, the container uses an NR coding format; or when the source network device is an LTE base station, the container uses an LTE coding format. The coding format may also be referred to as a coding scheme, a coding policy, or the like.

That the container uses a coding format corresponding to a communication standard of the source network device may also be understood as that the container uses a coding format corresponding to a communication standard of a network device to which the source cell belongs when the terminal device receives the handover message at a previous time/latest time, or the container uses a coding format corresponding to a network device that sends the handover message to the terminal device at a previous time/latest time. In other words, the source network device is the network device to which the source cell belongs when the terminal device receives the handover message at the previous time/latest time, or the network device that sends the handover message to the terminal device at the previous time/latest time.

In this embodiment of this application, the container may be considered as a set of the at least one piece of information that is related to the handover failure and that is included in the first report. For example, the information that is related to the handover failure and that is included in the first report or the container may include one or more of the following information:
1) Cell information of a failed cell (for example, failedPcellID): In a scenario in which a handover failure occurs, a failed cell (for example, failedPcell) may include a target cell in which the handover failure occurs.
2) Connection failure type (connectionFailureType), where the connection failure type may also be referred to as a failure type for short. Generally, a connection failure type includes two values: an HOF and an RLF. In a scenario in which a handover failure occurs in this embodiment, the failure type is specifically the HOF. In other words, the HOF is a type of connection failure.
3) Cell information (for example, previousPCellID) of a source cell when a terminal device receives a handover message at a previous time/latest time.
4) Cell information (reestablishmentCellID) of a cell in which a terminal device initiates connection reestablishment or connection restoration after a connection failure occurs.
5) Identification information of a terminal device in a cell in which a failure occurs may be, for example, a cell radio network temporary identifier (cell radio network temporary identifier, C-RNTI) allocated by the cell in which the failure occurs for the terminal device.
   When a connection failure type is an HOF, the C-RNTI may include a C-RNTI allocated by a source cell for the terminal device, and/or a C-RNTI allocated by a target cell for the terminal device.
6) Connection failure time (timeConnFailure), where the connection failure time means information about a time period from time when a handover message is received at a previous/last/latest time to time when a connection failure occurs.
7) Time (timeSinceFailure) since failure, where the time since failure means a length of time recorded from time when a connection failure occurs, and generally means information about a time period from the time when the connection failure occurs to time when a report (for example, the first report) is reported.
8) Information about a time period from time when a connection failure occurs to time when a connection is restored.
9) Signal quality of one or more of a source cell, a target cell, and a reestablishment cell (or a cell whose connection is restored).

It should be understood that the cell information may include at least one of a cell global identifier (cell global identifier, CGI), a physical cell identifier (physical cell identifier, PCI), frequency information, a tracking area code (tracking area code, TAC), and a RAN area code (RAN area code, RAN AC). The CGI may include a public land mobile network (public land mobile network identifier, PLMN ID) and a cell identifier (cell identifier).

The signal quality may include at least one of the following: received signal code power (received signal code power, RSCP), reference signal received power (reference signal received power, RSRP), reference signal received quality (reference signal received quality, RSRQ), a signal-to-noise ratio (signal noise ratio, SNR), a signal to interference plus noise ratio (signal to interference plus noise ratio, SINR), and a reference signal strength indication (reference signal strength indication, RSSI). The signal quality may be signal quality of a cell, and/or signal quality of a beam belonging to the cell.

It should be noted that, in this embodiment, the connection failure type may be the HOF.

Optionally, the first report may further include first information, and the first information indicates that the first report is a report for an inter-RAT handover scenario. Alternatively, it may be understood as that the first information indicates that current handover belongs to an inter-RAT handover scenario. As described above, inter-RAT may also be referred to as inter-RAT, and means that the source network device and the target network device use different communication standards. In other words, inter-RAT in this embodiment is measured from a dimension of an access network.

Optionally, the first report may further include second information, and the second information indicates that the first report is a report for an inter-system handover scenario or a report for an intra-system handover scenario. Alternatively, it may be understood as that the second information indicates that current handover belongs to inter-system handover or intra-system handover. Inter-system may also be referred to as inter-system, and the intra-system may also be referred to as intra-system. For example, the second information may be an information element "Inter-system HO". When the first report includes the second information, it indicates that the first report is the report for the inter-system handover scenario; or when the first report does not include the second information, it indicates that the first report is the report for the intra-system handover scenario. For another example, the second information may be an information element "Intra-system HO". When the first report includes the second information, it indicates that the first report is the report for the intra-system handover scenario; or when the first report does not include the second information, it indicates that the first report is the report for the inter-system handover scenario. It should be noted that, in this embodiment, inter-system is measured from a dimension of a core network.

It may be learned that a handover scenario to which this embodiment of this application is applicable may be inter-system inter-RAT handover, or may be intra-system inter-RAT handover.

Specifically, if the first report is the report for the inter-system handover scenario, it indicates that the handover scenario is the inter-system inter-RAT handover. To be specific, the source network device and the target network device not only use different communication standards, but also are connected to core networks of different communication systems. For example, one of the source network device and the target network device is an NR base station, and the NR base station is connected to a core network 5GC in a 5G system. The other is an LTE base station, and the LTE base station is connected to a core network EPC in a 4G system.

If the first report is the report for the intra-system handover scenario, it indicates that the handover scenario is the intra-system inter-RAT handover. To be specific, the source network device and the target network device use different communication standards but are connected to a core network in a same communication system. For example, one of the source network device and the target network device is an NR base station, and the other is an LTE base station. Both the NR base station and the LTE base station are connected to a 5GC, or both the NR base station and the LTE base station are connected to an EPC.

The first information and the second information may be considered as information that indicates a type of the first report or a handover scenario corresponding to the first report. It may be understood that the first information may be included in the handover failure container in the first report, or may be included outside the handover failure container in the first report. This is not limited in this application. Similarly, the second information may be included in the handover failure container in the first report, or may be included outside the handover failure container in the first report. This is also not limited in this application.

In a possible design, the first report may include a copy of the first information, and a coding scheme of the copy is consistent with a communication standard of a first network device. In other words, the copy uses a coding scheme corresponding to the communication standard of the first network device. Optionally, the copy may be located outside the handover failure container in the first report. In another possible design, the first report may include two copies of the first information. A coding scheme of one copy is consistent with a communication standard of a first network device, and a coding scheme of the other copy is consistent with the coding scheme of the source network device. In other words, one of the two copies of the first information uses a coding scheme corresponding to the communication standard of the first network device, and the other copy uses the coding scheme corresponding to the communication standard of the source network device. Optionally, the copy whose coding format is consistent with the communication standard of the first network device may be located outside the handover failure container in the first report; and the copy whose coding format is consistent with the communication standard of the source network device may be located outside the handover failure container in the first report, or may be located in the handover failure container in the first report.

Similarly, in a possible design, the first report may include a copy of the second information, and a coding scheme of the copy is consistent with a communication standard of a first network device. In other words, the copy uses a coding scheme corresponding to the communication standard of the first network device. Optionally, the copy may be located outside the handover failure container in the first report. In another possible design, the first report may include two copies of the second information. A coding scheme of one copy is consistent with a communication standard of a first network device, and a coding scheme of the other copy is consistent with the coding scheme of the source network device. In other words, one of the two copies of the second information uses a coding scheme corresponding to the communication standard of the first network device, and the other copy uses the coding scheme corresponding to the communication standard of the source network device. Optionally, the copy whose coding format is consistent with the communication standard of the first network device may be located outside the handover failure container in the first report; and the copy whose coding format is consistent with the communication standard of the source network device may be located outside the handover failure container in the first report, or may be located in the handover failure container in the first report.

Optionally, the first report may further include information indicating the coding format used by the container, to be specific, a coding format of the information that is related to the handover failure and that is included in the first report. The information may be included in the container in the first report, or may be included outside the container in the first report. This is not limited in this application.

In a possible design, the first report may include a copy of the information indicating the coding format used by the container. A coding scheme of the copy is consistent with a communication standard of a first network device. In other words, the copy uses a coding scheme corresponding to the communication standard of the first network device. Optionally, the copy may be located outside the handover failure container in the first report. In another possible design, the first report may include two copies of the information indicating the coding format used by the container. A coding scheme of one copy is consistent with a communication standard of a first network device, and a coding scheme of the other copy is consistent with the coding scheme of the source network device. In other words, one of the two copies of the first information uses a coding scheme corresponding to the communication standard of the first network device, and the other copy uses the coding scheme corresponding to the communication standard of the source network device. Optionally, the copy whose coding format is consistent with the communication standard of the first network device may be located outside the handover failure container in the first report; and the copy whose coding format is consistent with the communication standard of the source network device may be located outside the handover failure container in the first report, or may be located in the handover failure container in the first report.

Step S303: The terminal device sends the first report to the first network device.

The first network device may be the source network device, may be the target network device, or may be another network device different from the source network device or the target network device, for example, a network device that performs connection restoration or reestablishment after the handover failure. This is not limited in this application. It may be understood that if the first network device is the source network device, it indicates that the terminal device may directly send the first report to the source network device.

Optionally, the first report uses the coding format corresponding to the communication standard of the first network device, so that the first network device reads or parses information included in the first report. It should be noted that, in this embodiment of this application, the coding format of the first report and the coding format of the handover failure container in the first report may be different concepts. To be specific, when both the first report and the handover failure container use a coding format corresponding to a communication standard, the coding format of the first report may still be the same as or different from the coding format of the handover failure container. This is not limited.

Optionally, the first report may include a third container, and the third container uses the coding format corresponding to the communication standard of the first network device. The third container may be considered as a set of the at least one piece of information that is related to the handover failure and that is included in the first report. For content included in the third container, refer to the content included in the handover failure container. Details are not described again.

Correspondingly, the first network device receives the first report from the terminal device.

Step S304: The first network device processes the first report.

In this embodiment of this application, the first report may be sent in the handover failure scenario. For example, the terminal device may send the first report in too early handover (too early handover event) or handover to a wrong cell (handover to a wrong cell event) scenario, and the failure type is the HOF.

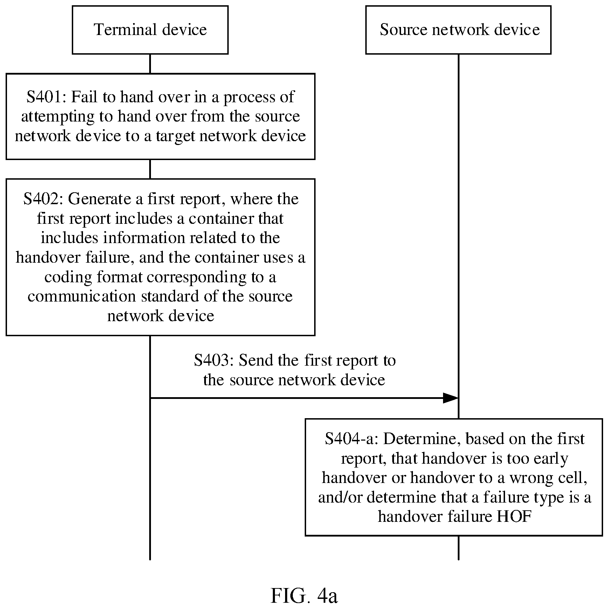

In a possible implementation, as shown in FIG. 4a, if the first network device is the source network device, to be specific, the first network device and the source network device are a same network device, that the first network device processes the first report after receiving the first report may include (corresponding to step S404 -a in FIG. 4a): determining, based on the information related to the handover failure and other information (for example, time of receiving the first report and a time of sending the handover message) that are in the first report, that the handover is too early handover or handover to a wrong cell, and/or determining that the failure type is the HOF. For specific implementations of step S401 to step S403 in FIG. 4a, refer to descriptions of corresponding steps in FIG. 3.

Further, the first network device may optimize a mobility-related parameter of the terminal device based on that the handover is too early handover or handover to a wrong cell and the failure type HOF. For example, based on the received information related to the handover failure, the first network device may determine a proper cell/target network device as the target cell/target network device, determine a proper sending occasion for the handover message, or adjust a corresponding parameter (for example, resource configuration information used for the handover) required for the handover corresponding to the target cell/target network device. Therefore, a handover success rate of the terminal device is improved. The handover to a wrong cell may refer to handover to a wrong cell.

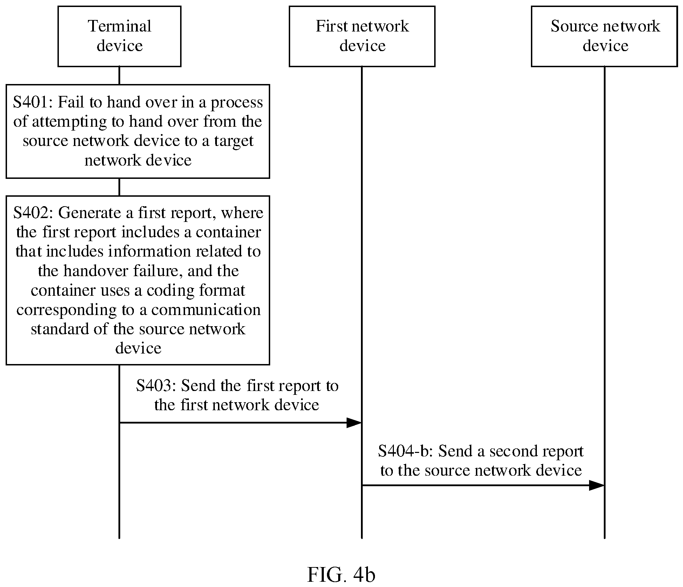

In another possible implementation, as shown in FIG. 4b, if the first network device is not the source network device, to be specific, the first network device and the source network device are different network devices, that the first network device processes the first report after receiving the first report may include (corresponding to step S404-b in FIG. 4b): obtaining the handover failure container in the first report, and then sending a second report to the source network device, where the second report includes the handover failure container. To be specific, the first network device may send the second report to a network device to which a cell (for example, a previousPCell) belongs or a network device to which a source cell belongs when the terminal device receives a handover message at a previous time/latest time, to forward the handover failure container to the source network device. Correspondingly, the source network device may receive the second report from the first network device. The second report may also be referred to as a handover report (namely, an HO report), the RLF report, a second message, or another name. This is not limited in this application. For specific implementations of step S401 to step S403 in FIG. 4b, refer to descriptions of corresponding steps in FIG. 3.

Optionally, after receiving the second report, the source network device may identify, based on the at least one piece of information that is related to the handover failure and that is included in the second report or based on content included in the handover failure container, that the handover is too early handover or handover to a wrong cell, and the failure type is the HOF; and then correspondingly optimize a mobility-related configuration parameter. For example, based on the received information related to the handover failure, the source network device may determine a proper cell/target network device as the target cell/target network device, or determine a proper sending occasion for the handover message. It should be noted that, in this embodiment of this application, that the second report includes the container means that the information that is related to the handover failure and that is included in the second report may be the same as the information that is related to the handover failure and that is included in the first report, or specific content in the container included in the second report may be partially the same as or completely the same as specific content in the container included in the first report. However, this does not mean that the information that is related to the handover failure and that is included in the second report is absolutely the same as the information that is related to the handover failure and that is included in the first report. The information that is related to the handover failure and that is included in the second report may be a part or all of the information that is related to the handover failure and that is included in the first report.

Optionally, the communication standard of the first network device may be the same as or different from the communication standard of the source network device. If the communication standard of the first network device is the same as the communication standard of the source network device, the first network device may identify, based on the information that is related to the handover failure and that is included in the first report or the handover failure container, that the handover is too early handover or handover to a wrong cell, and optionally notify the source network device of an identification result or optimize a mobility-related parameter of the terminal device; and then, send the information related to the handover failure or the handover failure container to the source network device.

If the communication standard of the first network device is different from the communication standard of the source network device, the first report may further include the third container that includes the at least one piece of information related to the handover failure, and the third container uses the coding format corresponding to the communication standard of the first network device, so that the first network device parses and obtains information in the third container. It may be understood that the information that is related to the handover failure and that is included in the third container may be completely or partially the same as the information that is related to the handover failure and that is included in the first container.

Optionally, the second report may further include third information, and the third information indicates that the second report is a report for an inter-RAT handover scenario.

Optionally, the second report may further include fourth information, and the fourth information indicates that the second report is a report for an inter-system handover scenario or a report for an intra-system handover scenario.

It may be understood that the third information in the second report may be included in the container in the second report, or may be included outside the container in the second report. This is not limited in this application. Similarly, the fourth information may be included in the container in the second report, or may be included outside the container in the second report. This is also not limited in this application.

The third information and the fourth information may also be understood as information that indicates a type of the second report or a handover scenario corresponding to the second report. For a specific implementation of the third information, refer to the foregoing descriptions of the first information. For a specific implementation of the fourth information, refer to the foregoing descriptions of the second information. Details are not described again.

It should be noted that, in this embodiment of this application, before sending the first report, the terminal device may reestablish/restore a connection to a network device. However, it should be noted that the network device to which the terminal device reestablishes/restores the connection and the source network device may be a same network device, or may be different network devices. This is not limited. Optionally, a communication standard of the network device to which the terminal device reestablishes/restores the connection may be the same as or different from the communication standard of the source network device. In addition, the first network device and the network device to which the terminal device reestablishes/restores the connection may be a same network device or different network devices.

Further, in the scenario in which the handover failure occurs in the handover process, if a cell in which the terminal device attempts to reestablish/restore a connection is a same cell as the source cell, or a different cell but belongs to a same network device (namely, the source network device) as the source cell, or a different cell but belongs to a same communication standard as the source network device, the handover may be considered as too early handover. If a cell in which the terminal device attempts to reestablish/restore a connection is different from the source cell and the target cell, the cell and the source cell do not belong to a same network device, or a network device to which the cell belongs and the source network device do not belong to a same communication standard, the handover may be considered as handover to a wrong cell.

It can be learned that, in an inter-RAT handover scenario in which the terminal device fails to hand over to the target network device, the failure type is the HOF, and the information that is related to the handover failure and that is recorded/stored by the terminal device may be sent to the source network device. In this embodiment of this application, because the coding format of the container in the first report is consistent with the communication standard of the source network device, after receiving the first report, the first network device can send the container to the source network device, so that the source network device can conveniently and quickly parse out the information that is related to the handover failure of the terminal device and that is included in the container. Therefore, implementation complexity of the source network device is reduced, efficiency of optimizing a mobility-related parameter by a network is effectively improved, and the handover success rate of the terminal device is improved.

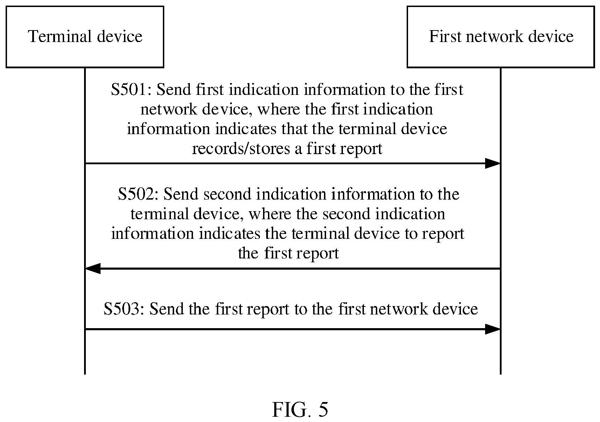

Optionally, before step S303 is performed, to be specific, before the terminal device sends the first report to the first network device, a procedure shown in FIG. 5 may further be performed between the terminal device and the first network device.

Specifically, in step S501, if the terminal device records/stores the at least one piece of information related to the handover failure, or the terminal device records/stores the handover failure container, the terminal device may send first indication information to the first network device, where the first information indicates that the terminal device records/stores the first report. Optionally, the first indication information may further specifically indicate that the first report is a report for an inter-RAT handover scenario, and/or the first indication information may further specifically indicate that the first report is a report for an inter-system handover scenario or a report for an intra-system handover scenario.

Further, in step S502, after receiving the first indication information sent by the terminal device, the first network device may send second indication information to the terminal device, where the second indication information requests the terminal device to report the first report. Subsequently, in step S503, after receiving the second indication information, the terminal device may send the first report to the first network device.

In another possible implementation, step S502 may alternatively be: The first network device sends a request message to the terminal device, where the request message requests the terminal device to report the first report, and the request message may be a UEInformtionRequest message or another message. This is not limited in this application.

Correspondingly, step S503 may be: After receiving the request message, the terminal device sends a response message to the first network device. The response message may be a UEInformationResponse message or another message. This is not limited in this application. The response message includes the information that is related to the handover failure and that is recorded by the terminal device. For specific content, refer to the foregoing descriptions of the content included in the first report/container. Optionally, the response message may further include the first information and/or the second information described above. Optionally, the response message may further include information indicating the coding scheme of the information related to the handover failure. It may be understood that the terminal device may send, by using the response message, all or a part of the information included in the first report.

The following describes a specific example of this embodiment of this application: Example 1.

In this example, a source base station is an LTE base station, and a target base station is an NR base station. The LTE base station used as the source base station may be a base station connected to a core network in a 4G system, or may be a base station connected to a core network in a 5G system. This is not limited. The NR base station used as the target base station is a base station connected to the core network in the 5G system.

A handover failure occurs in a process in which UE is handed over from the source base station to the target base station, and a terminal device attempts to reestablish/restore a connection to the LTE base station. The LTE base station to which the UE attempts to reestablish/restore the connection and the LTE base station used as the source base station may be a same base station, or may be different base stations. This is not limited. A cell in which the terminal device attempts to reestablish/restore a connection may be a source cell, a cell different from a source cell but belonging to a same base station (namely, the source base station) as the source cell, a cell different from a source cell but belonging to a same communication standard (namely, an LTE standard) as the source base station, or a cell different from a source cell and a target cell, where the cell and the source cell do not belong to a same base station, or a communication standard of a base station that manages the cell is not an LTE standard.

It is assumed that the UE sends a recorded first report to a first base station, and a communication standard of the first base station is LTE (that is, the first base station is also an LTE base station), the first report sent by the UE uses an LTE coding format. The first report includes a container (denoted as a first container herein), and the first container includes information related to the handover failure of the UE, for example, one or more of cell information of the source cell, cell information of the target cell, a failure type "HOF", cell information of the cell in which the connection is restored, information about a time period from receiving a handover message to handover failure, information about a time period from handover failure to reporting the first report, and information about a time period from handover failure to connection restoration. The first container uses a coding format corresponding to a communication standard of the source base station, namely, the LTE coding format.

Optionally, the first report may further include information that indicates a type or a handover scenario of the first report. For example, the first report may include first information, and the first information may indicate that the first report is a report for an inter-RAT handover scenario, in other words, indicate that the current handover belongs to an inter-RAT handover scenario. The first report may further include second information, and the second information indicates that the first report is a report for an inter-system handover scenario or a report for an intra-system handover scenario, in other words, indicates that the current handover belongs to an inter-system handover scenario or an intra-system handover scenario.

After receiving the first report, the first base station may determine, based on the cell information of the source cell, the failure type "HOF", and the like that are included in the report, to forward a part or all of the information that is related to the handover failure and that is included in the first report to the source base station. In an example, the first base station may send the first container in the first report to the source base station by using a second report; or to be specific, the first base station may send a part or all of the information that is related to the handover failure and that is included in the first report to the source base station by using a second report. In this way, because the first container uses the LTE coding format, after receiving the first container, the source base station can correctly decode the first container and obtain the information that is related to the handover failure and that is included in the first container, to reduce implementation complexity of the source base station.

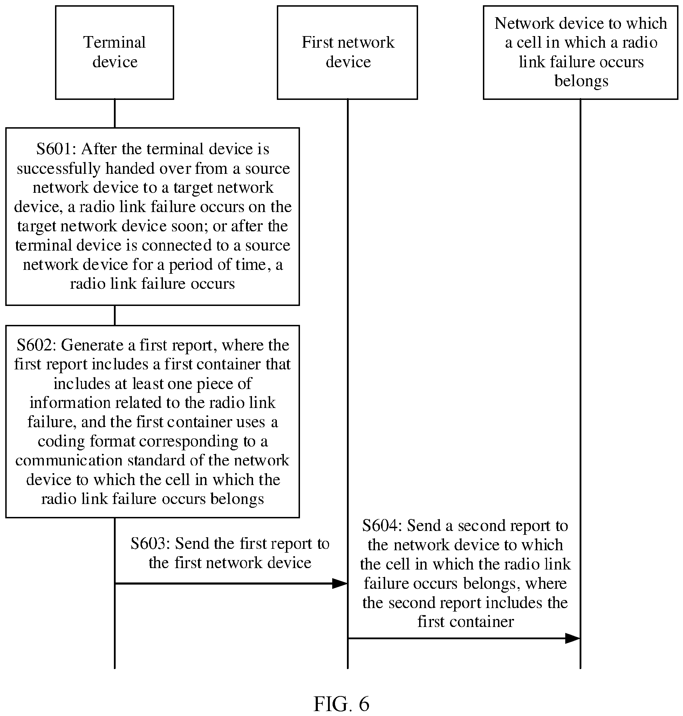

FIG. 6 is a schematic flowchart of another communication method according to this application. The method includes the following steps.

Step S601: a radio link failure occurs on a target network device shortly after a terminal device is successfully handed over from a source network device to a target network device; or after a terminal device is connected to a source network device for a period of time, a radio link failure occurs.

In this embodiment of this application, the source network device and the target network device are network devices using different communication standards. For example, the source network device may be an NR base station, and the target network device may be an LTE base station. Alternatively, the source network device may be an LTE base station, and the target network device may be an NR base station. Alternatively, the source network device may be an NR base station, and the target network device may be an NR evolved base station. This is not limited in this embodiment.

Specifically, after receiving a handover message from the source network device, the terminal device attempts to hand over from the source network device to the target network device. A radio link failure occurs on a target network device shortly after the terminal device is successfully handed over from the source network device to the target network device. Alternatively, after the terminal device is connected to the source network device for a period of time, a radio link failure occurs. In other words, the RLF occurs on the source network device before the terminal device receives the handover message. The handover message indicates the terminal device to hand over from the source network device to the target network device, or the handover message indicates the terminal device to hand over from a source cell to a target cell. The handover message may also be referred to as a handover command, a reconfiguration message, or another name. This is not limited in this application. For example, the handover message may be MobilityFromEUTRACommand, MobilityFromNRCommand, or another message.

Optionally, a connection failure occurs on a target network device shortly after the terminal device is successfully handed over from the source network device to the target network device, or after the terminal device is connected to the source network device for a period of time and a connection failure occurs, the terminal device may determine that a failure type (or a connection failure type) is a radio link failure (RLF).

If a radio link failure occurs on the target network device shortly after the terminal device is successfully handed over from the source network device to the target network device, after the radio link failure, the terminal device may restore a connection to the source network device or another network device, in other words, reestablish a connection. For example, the terminal device may reestablish a connection to the source network device or another network device, communication standards used by the another network device and the source network device may be the same or different, and communication systems used by the another network device and the source network device may be the same or different. A reestablishment cell may be the source cell, or another cell different from the source cell and the target cell. This is not limited in this application.

If a radio link failure occurs after the terminal device is connected to the source network device for a period of time (in other words, the RLF occurs on the source network device before the terminal device receives a handover message), after the radio link failure, the terminal device may restore a connection to the source network device or another network device, in other words, reestablish a connection. For example, the terminal device may reestablish a connection to the source network device or another network device, communication standards used by the another network device and the source network device may be the same or different, and communication systems used by the another network device and the source network device may be the same or different. A reestablishment cell may be another cell different from the source cell and the target cell. This is not limited in this application.

Step S602: The terminal device generates a first report, where the first report includes a first container that includes at least one piece of information related to the radio link failure, and the first container uses a coding format corresponding to a communication standard of a network device to which a cell in which the radio link failure occurs belongs.

The first report may also be referred to as a radio link failure (radio link failure, RLF) report, a connection failure report, a first message, or another name. This is not limited in this application. The first container that includes the at least one piece of information related to the radio link failure may also be referred to as a radio link failure container. The container may be understood as a carrier of encapsulation information or a data structure of encapsulation information.

In this embodiment of this application, because a radio link failure occurs on a target network device shortly after the terminal device is successfully handed over from the source network device to the target network device, or after the terminal device is connected to the source network device for a period of time, a radio link failure occurs. In other words, the failure type is the "RLF". Therefore, when recording/storing information, the terminal device may determine that the first container uses the coding format corresponding to the communication standard of the network device to which the cell in which the radio link failure occurs belongs.

Specifically, the first container may be considered as a set of the at least one piece of information that is related to the radio link failure and that is included in the first report. For specific content of the at least one piece of information that is related to the radio link failure and that is included in the first report or the first container, refer to the foregoing descriptions of "at least one piece of information related to the handover failure", and repeated content is not described herein again. However, it should be noted that, in a scenario in which a radio link failure occurs in this embodiment, the failed cell in 1) may include a cell in which a radio link failure occurs. The failure type in 2) is specifically an RLF, and the RLF is also a type of a connection failure corresponding to the failure type RLF. The C-RNTI in 5) may include a C-RNTI allocated by a serving cell for the terminal device when a radio link failure occurs.

If a radio link failure occurs on the target network device shortly after the terminal device is successfully handed over from the source network device to the target network device, optionally, the first report or the first container may further include information about a time period from receiving the handover message to successfully handed over to the target network device, and information about a time period from successfully receiving the handover message to occurrence of the radio link failure on the target network device.

Optionally, the first report may further include first information, and the first information indicates that the first report is a report for an inter-RAT handover scenario. Alternatively, it may be understood as that the first information indicates that current handover belongs to an inter-RAT handover scenario. As described above, inter-RAT may also be referred to as inter-RAT, and means that the source network device and the target network device use different communication standards. In other words, inter-RAT in this embodiment is measured from a dimension of an access network.

Optionally, the first report may further include second information, and the second information indicates that the first report is a report for an inter-system handover scenario or a report for an intra-system handover scenario. Alternatively, it may be understood as that the second information indicates that current handover belongs to an inter-system handover scenario or an intra-system handover scenario. If the first report is the report for the inter-system handover scenario, it indicates that the handover scenario is inter-system inter-RAT handover. If the first report is the report for the intra-system handover scenario, it indicates that the handover scenario is intra-system inter-RAT handover. For example, the second information may be an information element "Inter-system HO". When the first report includes the second information, it indicates that the first report is the report for the inter-system handover scenario; or when the first report does not include the second information, it indicates that the first report is the report for the intra-system handover scenario. For another example, the second information may be an information element "Intra-system HO". When the first report includes the second information, it indicates that the first report is the report for the intra-system handover scenario; or when the first report does not include the second information, it indicates that the first report is the report for the inter-system handover scenario. It should be noted that, in this embodiment, inter-system is measured from a dimension of a core network.

The first information and the second information may be considered as information that indicates a type of the first report or a handover scenario corresponding to the first report. It may be understood that the first information may be included in the first container in the first report, or may be included outside the first container in the first report. This is not limited in this application. Similarly, the second information may be included in the first container in the first report, or may be included outside the first container in the first report. This is also not limited in this application.

In a possible design, the first report may include a copy of the first information, and a coding scheme of the copy is consistent with a communication standard of a first network device. In other words, the copy uses a coding scheme corresponding to the communication standard of the first network device. Optionally, the copy may be located outside the handover failure container in the first report. In another possible design, the first report may include two copies of the first information, and a coding scheme of one copy is consistent with a communication standard of a first network device. If a radio link failure occurs on the target network device shortly after the terminal device is successfully handed over from the source network device to the target network device, a coding scheme of the other copy is consistent with a coding scheme of the target network device. In other words, one of the two copies of the first information uses a coding scheme corresponding to the communication standard of the first network device, and the other copy uses a coding scheme corresponding to the communication standard of the target network device. Optionally, the copy whose coding format is consistent with the communication standard of the first network device may be located outside the handover failure container in the first report; and the copy whose coding format is consistent with the communication standard of the target network device may be located outside the handover failure container in the first report, or may be located in the handover failure container in the first report. If a radio link failure occurs after the terminal device is connected to the source network device for a period of time, a coding scheme of the other copy is consistent with a coding scheme of the source network device. To be specific, one of the two copies of the first information uses a coding scheme corresponding to the communication standard of the first network device, and the other copy uses a coding scheme corresponding to a communication standard of the source network device. Optionally, the copy whose coding format is consistent with the communication standard of the first network device may be located outside the handover failure container in the first report; and the copy whose coding format is consistent with the communication standard of the source network device may be located outside the handover failure container in the first report, or may be located in the handover failure container in the first report.

Similarly, in a possible design, the first report may include a copy of the second information, and a coding scheme of the copy is consistent with a communication standard of a first network device. In other words, the copy uses a coding scheme corresponding to the communication standard of the first network device. Optionally, the copy may be located outside the handover failure container in the first report. In another possible design, the first report may include two copies of the second information, and a coding scheme of one copy is consistent with a communication standard of a first network device. If a radio link failure occurs on the target network device shortly after the terminal device is successfully handed over from the source network device to the target network device, a coding scheme of the other copy is consistent with a coding scheme of the target network device. To be specific, one of the two copies of the second information uses a coding scheme corresponding to the communication standard of the first network device, and the other copy uses a coding scheme corresponding to the communication standard of the target network device. Optionally, the copy whose coding format is consistent with the communication standard of the first network device may be located outside the handover failure container in the first report; and the copy whose coding format is consistent with the communication standard of the target network device may be located outside the handover failure container in the first report, or may be located in the handover failure container in the first report. If a radio link failure occurs after the terminal device is connected to the source network device for a period of time, a coding scheme of the other copy is consistent with a coding scheme of the source network device. To be specific, one of the two copies of the first information uses a coding scheme corresponding to the communication standard of the first network device, and the other copy uses a coding scheme corresponding to a communication standard of the source network device. Optionally, the copy whose coding format is consistent with the communication standard of the first network device may be located outside the handover failure container in the first report; and the copy whose coding format is consistent with the communication standard of the source network device may be located outside the handover failure container in the first report, or may be located in the handover failure container in the first report.

Optionally, the first report may further include information indicating a coding format used by the first container, in other words, information indicating a coding format of information that is related to the radio link failure and that is included in the first report. The information may be included in the first container in the first report, or may be included outside the first container in the first report. This is not limited in this application.

In a possible design, the first report may include a copy of the information indicating the coding format used by the first container. A coding scheme of the copy is consistent with the communication standard of the first network device. In other words, the copy uses a coding scheme corresponding to the communication standard of the first network device. Optionally, the copy may be located outside the handover failure container in the first report. In another possible design, the first report may include two copies of the information indicating the coding format used by the first container. A coding scheme of one of the two copies is consistent with the communication standard of the first network device. If a radio link failure occurs after the terminal device is connected to the source network device for a period of time, a coding scheme of the other copy is consistent with a coding scheme of the source network device. To be specific, one of the two copies of the information indicating the coding format used by the first container uses the coding scheme corresponding to the communication standard of the first network device, and the other copy uses a coding scheme corresponding to the communication standard of the source network device. Optionally, the copy whose coding format is consistent with the communication standard of the first network device may be located outside the handover failure container in the first report; and the copy whose coding format is consistent with the communication standard of the source network device may be located outside the handover failure container in the first report, or may be located in the handover failure container in the first report. If a radio link failure occurs on the target network device shortly after the terminal device is successfully handed over from the source network device to the target network device, a coding scheme of the other copy is consistent with a coding scheme of the target network device. To be specific, one of the two copies of the information indicating the coding format used by the first container uses the coding scheme corresponding to the communication standard of the first network device, and the other copy uses the coding scheme corresponding to the communication standard of the target network device. Optionally, the copy whose coding format is consistent with the communication standard of the first network device may be located outside the handover failure container in the first report; and the copy whose coding format is consistent with the communication standard of the target network device may be located outside the handover failure container in the first report, or may be located in the handover failure container in the first report.

Step S603: The terminal device sends the first report to the first network device, where the first report includes the first container.

The first network device may be the source network device, may be the target network device, may be another network device different from the source network device or the target network device, or may be a network device that restores or reestablishes a connection after the handover failure. This is not limited in this application.

Optionally, the first report may use the coding format corresponding to the communication standard of the first network device, so that the first network device can correctly read the information included in the first report. It should be noted that, in this embodiment of this application, the coding format of the first report and the coding format of the first container in the first report may be different concepts. To be specific, when both the first report and the first container use a coding format corresponding to a communication standard, the coding format of the first report may still be the same as or different from the coding format of the first container. This is not limited.

Optionally, the first report may include a fourth container, and the fourth container uses the coding format corresponding to the communication standard of the first network device. The fourth container may be considered as a set of the at least one piece of information that is related to the handover failure and that is included in the first report. For content included in the fourth container, refer to the content included in the handover failure container or the first container. Details are not described again.

Optionally, before step S603 is performed, to be specific, before the terminal device sends the first report to the first network device, a procedure shown in FIG. 5 may further be performed between the terminal device and the first network device. For detailed descriptions of FIG. 5, refer to the foregoing descriptions. Details are not described herein again.

Correspondingly, the first network device receives the first report from the terminal device.

Optionally, if a radio link failure occurs on the target network device shortly after the terminal device is successfully handed over from the source network device to the target network device, after receiving the first report, the first network device may determine, based on the first report, that the handover is too early handover or handover to a wrong cell, and/or determine that a failure type is the RLF.

Optionally, if a radio link failure occurs after the terminal device is connected to the source network device for a period of time, the first network device may determine, based on the first report, that the handover is too late handover, and/or determine that a failure type is an RLF.

Step S604: The first network device sends a second report to the network device to which the cell in which the radio link failure occurs belongs, where the second report includes the first container.

Optionally, the second report may further include third information, and the third information indicates that the second report is a report for an inter-RAT handover scenario. Alternatively, it may be understood as that the third information indicates that the current handover belongs to an inter-system handover scenario.

Optionally, the second report may further include fourth information, and the fourth information indicates that the second report is a report for an inter-system handover scenario or a report for an intra-system handover scenario. Alternatively, it may be understood as that the fourth information indicates that the current handover belongs to an inter-system handover scenario or an intra-system handover scenario. For descriptions of the fourth information, refer to the foregoing second information. Details are not described herein again.

The third information and the fourth information may also be understood as information that indicates a type of the second report or a handover scenario corresponding to the second report. For a specific implementation of the third information, refer to the foregoing descriptions of the first information. For a specific implementation of the fourth information, refer to the foregoing descriptions of the second information. Details are not described again.

Optionally, the second report may further include the information indicating the coding format used by the first container.

In this embodiment of this application, if a radio link failure occurs on the target network device shortly after the terminal device is successfully handed over from the source network device to the target network device, a cell in which a radio link failure occurs is the target cell, a network device to which the cell in which the radio link failure occurs belongs is the target network device, and the first container uses the coding format corresponding to the communication standard of the target network device.

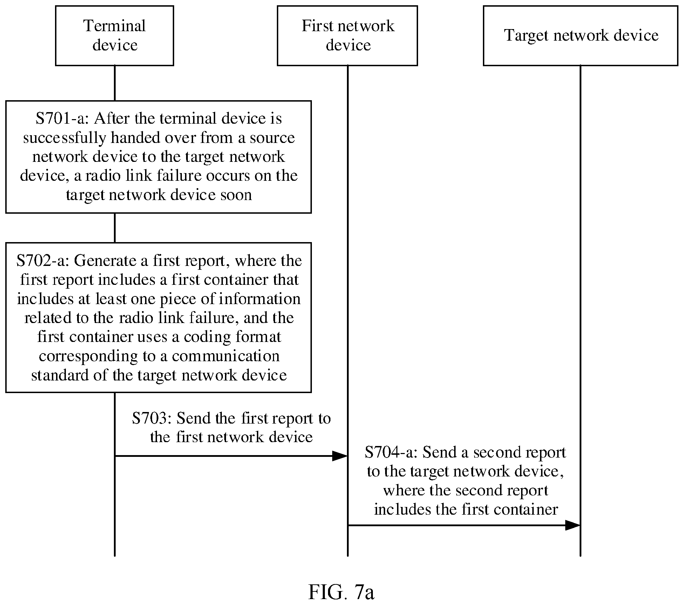

In this case, as shown in FIG. 7a, after the terminal device sends the first report to the first network device, the first network device may send the second report to the target network device based on the first report, where the second report includes the first container. Correspondingly, the target network device may receive the second report.

It should be noted that, in FIG. 7a, step S701-a includes: a radio link failure occurs on a target network device shortly after the terminal device is successfully handed over from the source network device to the target network device. Step S702-a includes: generating the first report, where the first report includes the first container that includes the at least one piece of information related to the radio link failure, and the first container uses the coding format corresponding to the communication standard of the target network device. Step S704-a includes: The first network device sends the second report to the target network device, where the second report includes the first container. For a specific implementation of another step (that is, step S703) shown in FIG. 7a, refer to descriptions of the corresponding step in FIG. 6. Details are not described herein again.

Because the first container uses the coding format corresponding to the communication standard of the target network device, after receiving the second report, the target network device can correctly decode the second report and obtain the information that is related to the radio link failure and that is included in the second report, and determine, based on the information related to the radio link failure, that the handover is too early handover or handover to a wrong cell, and/or determine that the failure type is the RLF. Optionally, the target network device may optimize a mobility-related parameter of the terminal device. For example, based on the received information related to the radio link failure, the target network device may determine a proper cell as the target cell, or adjust a corresponding parameter (for example, resource configuration information used for the handover) required for handover corresponding to the target cell, so that a handover success rate of the terminal device is improved.

Specifically, when the terminal device is successfully handed over from the source network device to the target network device, but shortly the radio link failure occurs on the target network device, if a cell in which the terminal device attempts to reestablish/restore a connection is a same cell as the source cell, or a different cell but belonging to a same network device (namely, the source network device) as the source cell, or a different cell but belonging to a same communication standard as the source network device, the handover may be considered as too early handover. If a cell in which the terminal device attempts to reestablish/restore a connection is different from the source cell and the target cell, the cell and the source cell do not belong to a same network device, or a network device to which the cell belongs and the source network device do not belong to a same communication standard, the handover may be considered as handover to a wrong cell.

Further, the target network device may send a third report to the source network device, where the third report includes a second container that includes the information related to the radio link failure, and the second container uses the coding format corresponding to the communication standard of the source network device. It may be understood that, because the second container uses the coding format corresponding to the communication standard of the source network device, the source network device can also correctly decode and obtain the information that is related to the connection failure and that is included in the second container. Optionally, the source network device may optimize the mobility-related parameter of the terminal device. For example, based on the received information related to the radio link failure, the source network device may determine a proper cell/target network device as the target cell/target network device, or determine a proper sending occasion for the handover message, so that the handover success rate of the terminal device is improved.

It should be noted that the second container may be obtained by the target network device by processing, based on the coding format corresponding to the communication standard of the source network device, the information that is related to the radio link failure, that is included in the first report, and that is received from the first network device. Alternatively, the second container may be received by the target network device from the first network device (for example, the first report sent by the terminal device to the first network device includes the second container, or the first network device generates the second container based on the first report).

If the second container is received by the target network device from the first network device, the first network device may send the first container and the second container to the target network device by using a same report, or may separately send the first container and the second container to the target network device by using different reports. This is not limited in this application.

Specifically, that the first network device sends the first container and the second container to the target network device by using a same report may mean that the same report (namely, the second report) further includes the second container in addition to the first container, where the first container uses the coding format corresponding to the communication standard of the target network device, the second container uses the coding format corresponding to the communication standard of the source network device, and the information that is related to the radio link failure and that is included in the first container may be completely or partially the same as the information that is related to the radio link failure that is included in the second container.

That the first network device separately sends the first container and the second container to the target network device by using different reports means that in addition to sending the second report that includes the first container to the target network device, the first network device may further send the fourth report that includes the second container to the target network device. The first container in the second report uses the coding format corresponding to the communication standard of the target network device, and the second container in the fourth report uses the coding format corresponding to the communication standard of the source network device.

Optionally, the third report may further include fifth information, and the fifth information indicates that the third report is a report for an inter-RAT handover scenario. Alternatively, it may be understood as that the fifth information indicates that the current handover belongs to an inter-RAT handover scenario. For a specific implementation of the fifth information, refer to the foregoing descriptions of the first information or the third information.

Optionally, the third report may further include sixth information, and the sixth information indicates that the third report is a report for an inter-system handover scenario or a report for an intra-system handover scenario. Alternatively, it may be understood as that the sixth information indicates that the current handover belongs to an inter-system handover scenario or an intra-system handover scenario. For a specific implementation of the sixth information, refer to the foregoing descriptions of the second information or the fourth information.

Optionally, the third report may further include information indicating that the handover is too early handover or handover to a wrong cell.

Optionally, the third report may further include information indicating the coding format used by the second container.

It can be learned that, in an inter-RAT handover scenario in which the radio link failure occurs between the terminal device and the target network device after the terminal device is successfully handed over to the target network device, the failure type is the RLF, and information that is related to the radio link failure and that is recorded/stored by the terminal device may be sent to the target network device. In this embodiment of this application, because the coding format of the first container in the first report is consistent with the communication standard of the target network device, after receiving the first report, the first network device can send the first container in the first report to the target network device. In this way, the target network device can conveniently and quickly parse out the information related to the radio link failure of the terminal device. Therefore, implementation complexity of the target network device is reduced, efficiency of optimizing the mobility-related parameter by a network is effectively improved, and the handover success rate of the terminal device is improved.

In the scenario, the target network device may further send the information related to the radio link failure of the terminal device to the source network device. Because the coding format of the second container is consistent with the communication standard of the source network device, after receiving the third report from the target network device, the source network device can correctly parse out the information that is related to the radio link failure of the terminal device and that is included in the second container, to reduce implementation complexity of the source network device.

When the radio link failure occurs after the terminal device is connected to the source network device for a period of time, a cell in which a radio link failure occurs is the source cell, a network device to which the cell in which the radio link failure occurs belongs is the source network device, and the first container uses the coding format corresponding to the communication standard of the source network device.

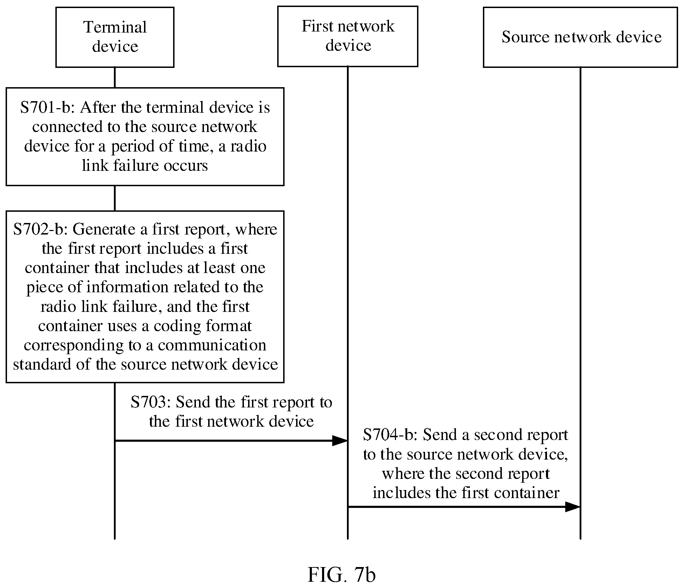

In this case, as shown in FIG. 7b, after the terminal device sends the first report to the first network device, the first network device may send the second report to the source network device based on the first report, where the second report includes the first container. Correspondingly, the source network device may receive the second report.

It should be noted that, in FIG. 7b, step S701-b includes that, after the terminal device is connected to the source network device for a period of time, the radio link failure occurs. Step S702-b includes: generating the first report, where the first report includes the first container that includes at least one piece of information related to the radio link failure, and the first container uses the coding format corresponding to the communication standard of the source network device. Step S704-b includes: The first network device sends the second report to the source network device, where the second report includes the first container. For a specific implementation of another step (that is, step S703) shown in FIG. 7b, refer to descriptions of the corresponding step in FIG. 6. Details are not described herein again.

Because the first container uses the coding format corresponding to the communication standard of the source network device, after receiving the second report, the source network device can correctly decode the second report and obtain the information that is related to the radio link failure and that is included in the second report, and determine, based on the information related to the connection failure, that the handover is too late handover, and/or determine that the failure type is the RLF.

Specifically, when the connection failure occurs after the terminal device is connected to the source network device for a period of time (in other words, the RLF occurs on the source network device before the terminal device receives the handover message), the handover may be considered as too late handover.

It can be learned that in an inter-RAT handover scenario in which a connection failure occurs between the terminal device and the source network device before the terminal device receives the handover message, the failure type is the RLF, and the information that is related to the radio link failure and that is recorded/stored by the terminal device may be sent to the source network device. In this embodiment of this application, because the coding format of the first container in the first report is consistent with the communication standard of the source network device, after receiving the first report, the first network device can send the first container in the first report to the source network device. In this way, the source network device can conveniently and quickly parse out the information that is related to the radio link failure of the terminal device and that is included in the first container. Therefore, the implementation complexity of the source network device is reduced, the efficiency of optimizing the mobility-related parameter by the network is effectively improved, and the handover success rate of the terminal device is improved.

The following describes another specific example according to an embodiment of this application: Example 2.

In this example, a source base station is an LTE base station, and a target base station is an NR base station. The LTE base station used as the source base station may be a base station connected to a core network in a 4G system, or may be a base station connected to a core network in a 5G system. This is not limited. The NR base station used as the target base station is a base station connected to the core network in the 5G system.

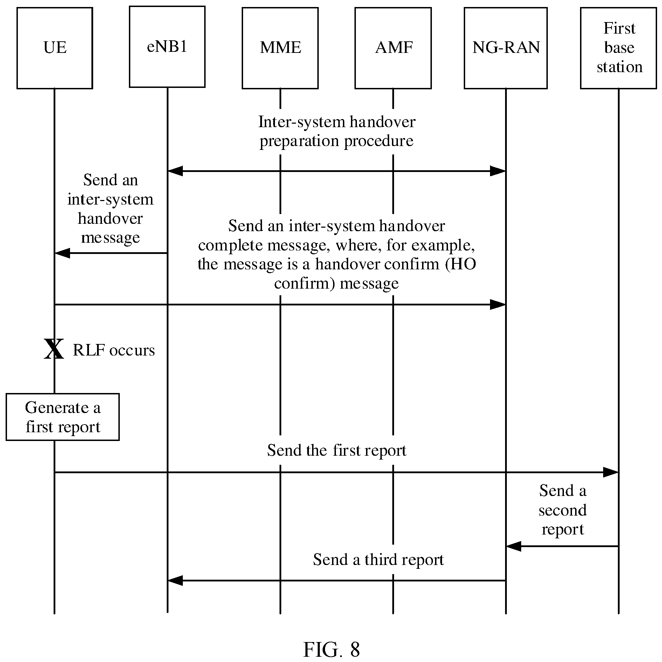

As shown in FIG. 8, first, a handover preparation procedure is performed between the source base station and a target base station. After the handover preparation procedure ends, the source base station sends a handover message to the UE, to indicate the UE to perform inter-RAT handover. It should be noted that the source base station shown in FIG. 8 is an LTE base station (for example, an eNB) connected to a core network in a 4G system, the target base station is an NR base station (for example, an NG-RAN or a gNB) connected to a core network in a 5G system, a mobility management entity (mobility management entity, MME) is a core network device in the 4G system, and an access and mobility management network element (access and mobility management function, AMF) is a core network device in the 5G system. Therefore, the scenario shown in FIG. 8 is specifically inter-RAT inter-system handover. However, it should be understood that this is only an example.

After the UE is successfully handed over from the source base station to the target base station (for example, after the UE sends a handover complete message (for example, HO confirm) to the target base station), a radio link failure quickly occurs on the target base station for the UE, and the terminal device attempts to reestablish/restore a connection to the LTE base station or the NR base station. If the base station to which the UE attempts to reestablish/restore the connection is the LTE base station, the LTE base station and the LTE base station used as the source base station may be a same base station or different base stations, and may be a same standard or different standards. This is not limited. If the handover is too early handover, a cell to which the UE attempts to reestablish or restore the connection may be the same as or different from a source cell. If the handover is handover to a wrong cell, a cell to which the UE attempts to reestablish or restore the connection may be different from a source cell and a target cell.

It is assumed that the UE sends a recorded first report to a first base station, and it is assumed that a communication standard of the first base station is LTE. The first base station and a base station to which the UE attempts to reestablish/restore the connection may be a same base station or different base stations. In this case, the first report sent by the UE uses an LTE coding format. The first report includes a container (denoted as a first container herein), and the first container includes information related to the radio link failure of the UE, for example, cell information of the source cell, cell information of a cell in which a connection failure occurs, and a failure type "RLF". The first container uses a coding format corresponding to a communication standard of the target base station, in other words, an NR coding format.

Optionally, the first report may further include information that indicates a type or a handover scenario of the first report. To be specific, the first report may include first information, and the first information may indicate that the first report is a report for an inter-RAT handover scenario, in other words, indicate that the current handover belongs to an inter-RAT handover scenario. The first report may further include second information, and the second information indicates that the first report is a report for an inter-system handover scenario or a report for an intra-system handover scenario, in other words, indicates that the current handover belongs to an inter-system handover scenario or an intra-system handover scenario.

After receiving the first report, the first base station may determine, based on the cell information of the source cell, the information about the cell in which the connection failure occurs, the failure type "RLF", and the like that are included in the report, to forward a part or all of the information that is related to the radio link failure and that is included in the first report to the target base station. In an example, the first base station may send the first container in the first report to the target base station by using a second report; or to be specific, the first base station may send a part or all of the information that is related to the radio link failure and that is included in the first report to the target base station by using a second report. Because the first container uses the NR coding format corresponding to the communication standard of the target base station, after receiving the first container, the target base station can correctly decode the first container and obtain the information that is related to the radio link failure and that is in the first container, to simplify implementation complexity of the target base station.

Optionally, the second report may further include information that indicates a type or a handover scenario of the second report. To be specific, the second report may include third information, and the third information indicates that the second report is a report for an inter-RAT handover scenario, in other words, indicates that the current handover belongs to an inter-RAT handover scenario. The second report may further include fourth information, and the fourth information indicates that the second report is a report for an inter-system handover scenario or a report for an intra-system handover scenario, in other words, indicates that the current handover belongs to an inter-system handover scenario or an intra-system handover scenario.

Further, the target base station may determine, based on the information that is related to the radio link failure and that is included in the first container, that the handover is too early handover or handover to a wrong cell, and/or determine that the failure type is the RLF, and determine that the source base station is the LTE base station.

In an implementation, the target base station may process, by using the LTE coding format corresponding to the communication standard of the source base station, the information that is related to the radio link failure and that is obtained from the first container, to obtain a second container, and then send the second container to the source base station by using a third report.

In another implementation, the first report may further include the second container, and the second container uses the LTE coding format corresponding to the communication standard of the source base station. To be specific, the first report includes two containers, which are respectively denoted as a first container and a second container. Both containers include the information related to the radio link failure. However, the first container uses the NR coding format corresponding to the communication standard of the target base station, and the second container uses the LTE coding format corresponding to the communication standard of the source base station. The first base station may send the first container and the second container to the target base station by using the second report. In this way, after receiving the second report, the target base station may determine that the handover is too early handover or handover to a wrong cell, and/or the failure type is the RLF. Because the target base station knows that the source base station is the LTE base station, the target base station can directly send the second container included in the second report to the source base station by using the third report.

Optionally, the third report may further include information that indicates a type or a handover scenario of the third report. For example, the third report may include fifth information, and the fifth information indicates that the third report is a report for an inter-RAT handover scenario, in other words, indicates that the current handover belongs to an inter-RAT handover scenario. The first report may further include sixth information, and the sixth information indicates that the third report is a report for an inter-system handover scenario or a report for an intra-system handover scenario, in other words, indicates that the current handover belongs to an inter-system handover scenario or an intra-system handover scenario.

Optionally, the third report may further include information indicating that the handover is too early handover or handover to a wrong cell.

The following describes still another specific example according to an embodiment of this application: Example 3.

In this example, a source base station is an NR base station, and a target base station is an LTE base station. The NR base station used as the source base station is a base station connected to a core network in a 5G system, and the LTE base station used as the target base station may be a base station connected to a core network in a 4G system, or may be the base station connected to the core network in the 5G system. This is not limited.

A radio link failure occurs after UE is connected to the source base station for a period of time, and the terminal device attempts to reestablish/restore a connection to the NR base station. The NR base station to which the UE attempts to reestablish/restore the connection and the NR base station used as the source base station may be a same base station or different base stations. This is not limited. The cell to which the UE attempts to reestablish/restore the connection the source cell may be a same cell or different cells.

It may be understood that a connection failure occurs after the UE is connected to the source base station for a period of time may be that the radio link failure occurs on the source base station, and as a result, a handover message fails to be sent to the UE, or the UE fails to receive a handover message. In this case, the cell in which the failure occurs is the source cell.

It is assumed that the UE sends a first report to a first base station, and it is assumed that a communication standard of the first base station is NR. The first base station and a base station to which the UE attempts to reestablish/restore the connection may be a same base station or different base stations. In this case, the first report sent by the UE uses an NR coding format. The first report includes a container (denoted as a first container herein), and the first container includes information related to the radio link failure of the UE, for example, cell information about a cell in which a connection failure occurs (in other words, cell information of the source cell), and a failure type "RLF". The first container uses a coding format corresponding to a communication standard of the source base station, in other words, the NR coding format.

Optionally, the first report may further include information that indicates a type or a handover scenario of the first report. To be specific the first report may include first information, and the first information indicates that the first report is a report for an inter-RAT handover scenario, in other words, indicates that the current handover belongs to an inter-RAT handover scenario. The first report may further include second information, and the second information indicates that the first report is a report for an inter-system handover scenario or a report for an intra-system handover scenario, in other words, indicates that the current handover belongs to an inter-system handover scenario or an intra-system handover scenario.

After receiving the first report, the first base station may determine, based on the information about the cell in which the connection failure occurs (in other words, the cell information of the source cell), the failure type "RLF" and the like that are included in the report, to forward a part or all of information that is related to the radio link failure and that is included in the first report to the source base station. In an example, the first base station may send the first container in the first report to the source base station by using a second report; or to be specific, the first base station may send a part or all of the information that is related to the radio link failure and that is included in the first report to the source base station by using a second report. Because the first container uses the NR coding format corresponding to the communication standard of the source base station, after receiving the first container, the source base station can correctly decode the first container and obtain the information that is related to the radio link failure and that is in the first container, to simplify implementation complexity of the source base station.

It should be noted that, in this embodiment of this application, if there is a directly connected interface, for example, an X2/Xn interface, between the first network device and the source network device or the target network device, the first network device may directly communicate with the source network device or the target network device through the X2/Xn interface, and send the first report (for example, an RLF report) received from the terminal device or a part or all of the information included in the first report to the source network device or the target network device.

If there is no directly connected interface between the first network device and the source network device or the target network device, and direct communication cannot be performed, the first network device may indirectly communicate with the source network device or the target network device by using a core network device. The first network device may send, to the core network device through an interface between the first network device and the core network device, for example, an SlING interface, the first report (for example, the RLF report) received from the terminal device or a part or all of the information included in the first report, and then the core network device forwards the first report or the part or all of the information included in the first report to the source network device or the target network device.

In an example, the first network device may send, to the source network device or the target network device by using at least one of the following messages on an Sl/NG interface, the RLF report or the part or all of the information included in the RLF report:
an uplink RAN configuration transfer (UPLINK RAN CONFIGURATION TRANSFER) message, a downlink RAN configuration transfer (DOWNLINK RAN CONFIGURATION TRANSFER) message, a base station configuration transfer (eNB CONFIGURATION TRANSFER or gNB CONFIGURATION TRANSFER) message, a core network device configuration transfer (MME CONFIGURATION TRANSFER or AMF CONFIGURATION TRANSFER) message, or another message.

In addition, in this embodiment of this application, if the source network device cannot directly communicate with the target network device through the X2/Xn interface, information may alternatively be transferred between the source network device and the target network device by using the core network device. The source network device and the target network device cannot directly communicate with each other through the X2/Xn interface, and may exist in the inter-system handover/inter-RAT handover scenario.

For example, in Example 2 described above, if the source base station is the LTE base station connected to the core network in the 5G system, and the target base station is the NR base station connected to the core network in the 5G system, the source base station and the target base station may directly communicate with each other through the Xn interface.

If the source base station is the LTE base station connected to the core network in a 4G system, and the target base station is the NR base station connected to the core network in the 5G system, the source base station cannot directly communicate with the target base station through the X2/Xn interface. Because the handover is the inter-system handover, a message transferred between the first network device and the target base station may be forwarded by using the core network device (namely, an MME and an AMF), and a message transferred between the target base station and the source base station may also be forwarded by using the core network device (namely, the MME and the AMF). The target base station may send, to the core network device through an interface (for example, the S1 or NG interface) between the target base station and the core network device, a part or all of information received by the target base station from the first base station, and then the core network device may forward, to the source base station through the S1 or NG interface, the part or all of the information received from the target base station.

It should be further noted that if the terminal device/the first network device/the source network device/the target network device includes a CU node and a DU node in separated forms, the CU node used as a message/information receiver may send the part or all of the received information to the DU node. Further, optionally, if the CU node may be divided into a control plane (CU-CP) and a user plane (CU-UP), a CU-CP node of the message/information receiver may send the part or all of the received information to a CU-UP node. The CU node, the DU node, the CU-CP node, and the CU-UP node may correspond to the UE, correspond to the first network device, correspond to the source base station, correspond to the target base station, or correspond to a base station on which the UE detects that the RLF occurs.

The foregoing inter-node sending process is applicable to any one of the foregoing method embodiments. For example, the terminal device sends the first report to the first network device. If the first network device in a separated form includes a CU node and a DU node, the CU node in the first network device may receive the first report from the terminal device. Optionally, the CU node may further send, to the DU node, the part or all of the information included in the received first report. Optionally, if the CU node may be divided into the control plane (CU-CP) and the user plane (CU-UP), the CU-CP node may send the part or all of the information included in the received first report to the CU-UP node. For a process in which the first network device sends information to the target network device, the target network device sends information to the source network device, and the first network device sends information to the source network device, refer to the foregoing descriptions. Details are not described again.

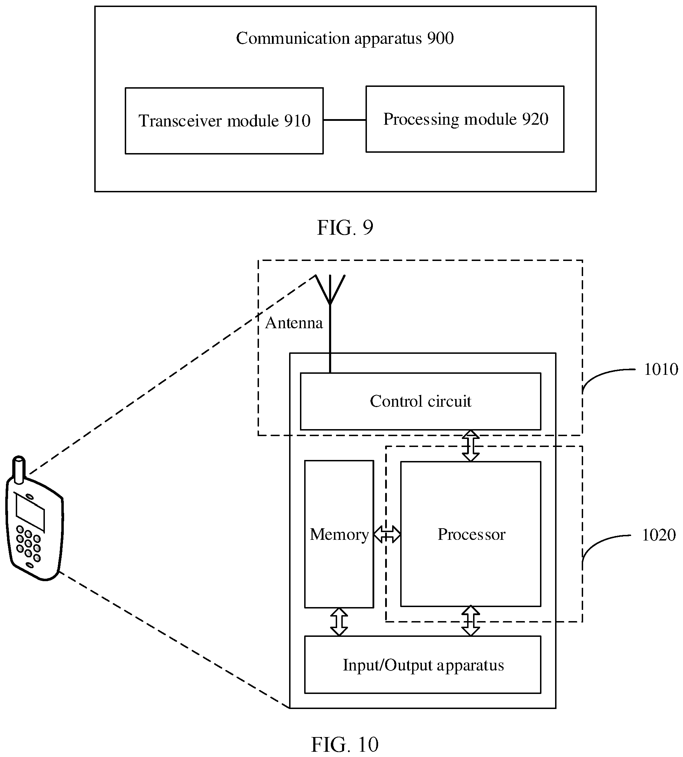

An embodiment of this application further provides a communication apparatus. FIG. 9 is a schematic diagram of a structure of a communication apparatus according to an embodiment of this application. A communication apparatus 900 includes a transceiver module 910 and a processing module 920. The communication apparatus may be configured to implement a function of the terminal device according to any one of the foregoing method embodiments. For example, the communication apparatus may be a terminal device, for example, a handheld terminal device or a vehicle-mounted terminal device. Alternatively, the communication apparatus may be a chip or a circuit included in a terminal device, or an apparatus including a terminal device, for example, various types of vehicles.

For example, when the communication apparatus performs the method embodiment shown in FIG. 3, the processing module 920 is configured to: fail to hand over in a process of attempting to hand over from a source network device to a target network device, where the source network device and the target network device are network devices using different communication standards. The processing module 920 is further configured to generate a first report, where the first report includes a container that includes at least one piece of information related to the handover failure, and the container uses a coding format corresponding to a communication standard of the source network device. The transceiver module 910 is configured to send the first report to a first network device.

In a possible design, the first report further includes first information, and the first information indicates that the first report is a report for an inter-RAT handover scenario.

In a possible design, the first report further includes second information, and the second information indicates that the first report is a report for an inter-system handover scenario or a report for an intra-system handover scenario.

In a possible design, the transceiver module 910 is further configured to: send first indication information to the first network device, where the first indication information indicates that the terminal device records the first report; and receive second indication information from the first network device, where the second indication information indicates the terminal device to report the first report.

When the communication apparatus performs the method embodiment shown in FIG. 6, the processing module 920 is configured to: a radio link failure occurs on a target network device shortly after a successful handover from a source network device to a target network device, or after a connection to a source network device for a period of time, a radio link failure occurs, where the source network device and the target network device are network devices using different communication standards. The processing module 920 is further configured to generate a first report, where the first report includes a first container that includes at least one piece of information related to the radio link failure, and the first container uses a coding format corresponding to a communication standard of a network device to which a cell in which the radio link failure occurs belongs. The transceiver module 910 is configured to send the first report to a first network device.

In a possible design, when the radio link failure occurs on the target network device shortly after the terminal device is successfully handed over from the source network device to the target network device, the network device to which the cell in which the radio link failure occurs belongs is the target network device. The first report further includes a second container that includes the at least one piece of information related to the radio link failure, where the second container uses a coding format corresponding to a communication standard of the source network device.

In a possible design, the first report further includes first information, and the first information indicates that the first report is a report for an inter-RAT handover scenario.

In a possible design, the first report further includes second information, and the second information indicates that the first report is a report for an inter-system handover scenario or a report for an intra-system handover scenario.

In a possible design, the transceiver module 910 is further configured to: send first indication information to the first network device, where the first indication information indicates that the terminal device records the first report; and receive second indication information from the first network device, where the second indication information indicates the terminal device to report the first report.

The processing module 920 in the communication apparatus may be implemented by at least one processor or a processor-related circuit component, and the transceiver module 910 may be implemented by at least one transceiver, a transceiver-related circuit component, or a communication interface. Operations and/or functions of the modules in the communication apparatus are used to implement corresponding procedures of the method shown in FIG. 3, FIG. 4a, FIG. 4b, FIG. 5, FIG. 6, FIG. 7a, FIG. 7b, or FIG. 8. For brevity, details are not described herein again. Optionally, the communication apparatus may further include a storage module. The storage module may be configured to store data and/or instructions. The transceiver module 910 and/or the processing module 920 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

FIG. 10 is a schematic diagram of another structure of a communication apparatus according to an embodiment of this application. The communication apparatus may be specifically a terminal device, and the communication apparatus may be configured to implement a function of the terminal device according to any one of the foregoing method embodiments. For ease of understanding and ease of illustration, in FIG. 10, a mobile phone is used as an example of the terminal device. As shown in FIG. 10, the terminal device includes a processor, a memory, a radio frequency circuit, an antenna, an input/output apparatus, and the like. The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user. It should be noted that some types of terminal devices may have no input/output apparatus.

When needing to send data, after performing baseband processing on to-be-sent data, the processor outputs the baseband signal to the radio frequency circuit, and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 10 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as transceiver units of the terminal device, and the processor that has a processing function may be considered as a processing unit of the terminal device. As shown in FIG. 10, the terminal device includes a transceiver unit 1010 and a processing unit 1020. The transceiver unit may also be referred to as a transceiver, a transceiver machine, a transceiver apparatus, or the like. The processing unit may also be referred to as a processor, a processing board, a processing module, a processing apparatus, or the like. Optionally, a component configured to implement a receiving function in the transceiver unit 1010 may be considered as a receiving unit, and a component configured to implement a sending function in the transceiver unit 1010 may be considered as a sending unit. That is, the transceiver unit 1010 includes the receiving unit and the sending unit. The transceiver unit sometimes may also be referred to as the transceiver machine, the transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like. It should be understood that the transceiver unit 1010 is configured to perform a sending operation and a receiving operation on a terminal device side in the foregoing method embodiments, and the processing unit 1020 is configured to perform another operation other than the receiving operation and the sending operation of the terminal device in the foregoing method embodiments.

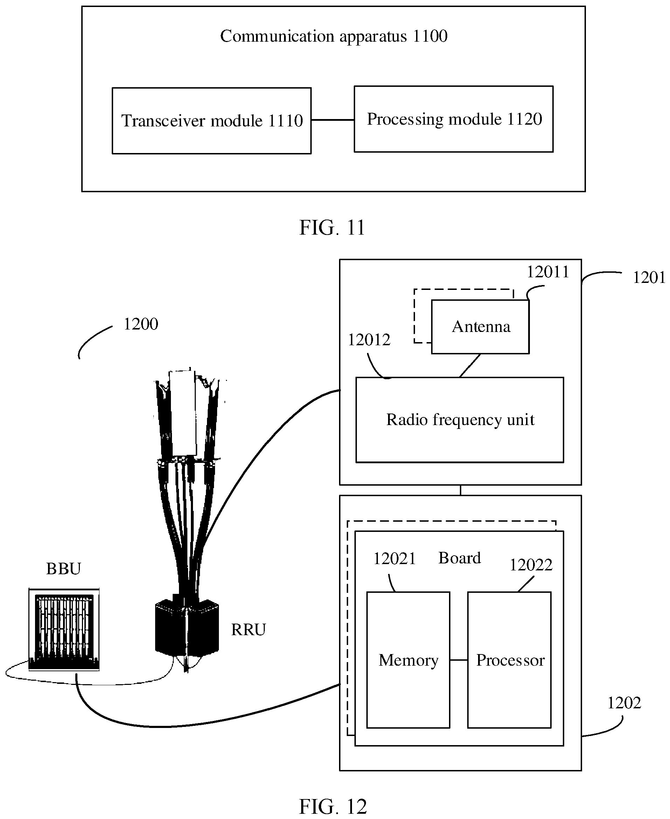

An embodiment of this application further provides another communication apparatus. FIG. 11 is a schematic diagram of a structure of a communication apparatus according to an embodiment of this application. A communication apparatus 1100 includes a transceiver module 1110 and a processing module 1120. The communication apparatus may be configured to implement a function of the network device (for example, the first network device or the target network device) according to any one of the foregoing method embodiments. For example, the communication apparatus may be a network device or a chip or a circuit included in a network device.

For example, when the communication apparatus performs an operation or a step corresponding to the first network device in the method embodiment shown in FIG. 3, the transceiver module 1110 is configured to receive a first report from a terminal device, where the first report includes a container that includes at least one piece of information related to a handover failure, the container uses a coding format corresponding to a communication standard of a source network device, the handover failure is a handover failure from the source network device to a target network device, and the source network device and the target network device are network devices using different communication standards. The processing module 1120 is configured to process the first report.

In a possible design, the processing module 1120 is specifically configured to obtain the container in the first report, and the first network device sends a second report to the source network device, where the second report includes the container.

In a possible design, the first report further includes first information, and the first information indicates that the first report is a report for an inter-RAT handover scenario; and/or the second report further includes third information, and the third information indicates that the second report is a report for an inter-RAT handover scenario.

In a possible design, the first report further includes second information, and the second information indicates that the first report is a report for an inter-system handover scenario or a report for an intra-system handover scenario; and/or the second report further includes fourth information, and the fourth information indicates that the second report is a report for an inter-system handover scenario or a report for an intra-system handover scenario.

In a possible design, the transceiver module 1110 is further configured to: receive first indication information from the terminal device, where the first indication information indicates that the terminal device records the first report; and send second indication information to the terminal device, where the second indication information indicates the terminal device to report the first report.

When the communication apparatus performs an operation or a step corresponding to the first network device in the method embodiment shown in FIG. 6, the transceiver module 1110 is configured to receive a first report from a terminal device, where the first report includes a first container that includes at least one piece of information related to a radio link failure, and the first container uses a coding format corresponding to a communication standard of a network device to which a cell in which the radio link failure occurs belongs. The processing module 1120 is configured to send, by using the transceiver module 1110, a second report to the network device to which the cell in which the radio link failure occurs belongs, where the second report includes the first container.

In a possible design, when the network device to which the cell in which the radio link failure occurs belongs is the target network device, the first report may further include a second container that includes the at least one piece of information related to the radio link failure, where the second container uses a coding format corresponding to a communication standard of the source network device. The transceiver module 1110 is further configured to send the second container to the target network device.

In a possible design, the first report further includes first information, and the first information indicates that the first report is a report for an inter-RAT handover scenario; and/or the second report further includes third information, and the third information indicates that the second report is a report for an inter-RAT handover scenario.

In a possible design, the first report further includes second information, and the second information indicates that the first report is a report for an inter-system handover scenario or a report for an intra-system handover scenario; and/or the second report further includes fourth information, and the fourth information indicates that the second report is a report for an inter-system handover scenario or a report for an intra-system handover scenario.

In a possible design, the transceiver module 1110 is further configured to: receive first indication information from the terminal device, where the first indication information indicates that the terminal device records the first report; and send second indication information to the terminal device, where the second indication information indicates the terminal device to report the first report.

When the communication apparatus performs an operation or a step corresponding to the target network device in the method embodiment shown in FIG. 6, the transceiver module 1110 is configured to receive a second report from a first network device, where the second report includes a first container that includes at least one piece of information related to a radio link failure, and the first container uses a coding format corresponding to a communication standard of the target network device. The processing module 1120 is configured to determine, based on the second report, that handover is too early handover or handover to a wrong cell, and/or determine that a failure type is the radio link failure. The transceiver module 1110 is further configured to send a third report to the source network device, where the third report includes a second container that includes the at least one piece of information related to the radio link failure, the second container uses a coding format corresponding to a communication standard of the source network device, and the source network device and the target network device are network devices using different communication standards.

In a possible design, the transceiver module 1110 is further configured to receive the second container from the first network device; or the processing module 1120 is further configured to process, based on the coding format corresponding to the communication standard of the source network device, the at least one piece of information that is related to the radio link failure and that is included in the first container, to obtain the second container.

In a possible design, the second report further includes third information, and the third information indicates that the second report is a report for an inter-RAT handover scenario; and/or the third report further includes fifth information, and the fifth information indicates that the third report is a report for an inter-RAT handover scenario.

In a possible design, the second report further includes fourth information, and the fourth information indicates that the first report is a report for an inter-system handover scenario or a report for an intra-system handover scenario; and/or the third report further includes sixth information, and the sixth information indicates that the third report is a report for an inter-system handover scenario or a report for an intra-system handover scenario.

In a possible design, the third report further includes information indicating that the handover is too early handover or handover to a wrong cell.

It should be understood that the processing module 1120 in the communication apparatus may be implemented by at least one processor or a processor-related circuit component, and the transceiver module 1110 may be implemented by at least one transceiver, a transceiver-related circuit component, or a communication interface. Operations and/or functions of the modules in the communication apparatus are used to implement corresponding procedures of the method shown in FIG. 3, FIG. 4a, FIG. 4b, FIG. 5, FIG. 6, FIG. 7a, FIG. 7b, or FIG. 8. For brevity, details are not described herein again. Optionally, the communication apparatus may further include a storage module. The storage module may be configured to store data and/or instructions. The transceiver module 1010 and/or the processing module 1020 may read the data and/or the instructions in the storage module, to enable the communication apparatus to implement a corresponding method. The storage module may be implemented, for example, by using at least one memory.

The storage module, the processing module, and the transceiver module may exist separately, or all or some of the modules may be integrated. For example, the storage module and the processing module are integrated, or the processing module and the transceiver module are integrated.

FIG. 12 is a schematic diagram of another structure of a communication apparatus according to an embodiment of this application. The communication apparatus may be specifically a network device, for example, a base station, and is configured to implement a function of the network device (for example, the first network device or the target network device) according to any one of the foregoing method embodiments.

The network device 1200 includes one or more radio frequency units, such as a remote radio unit (remote radio unit, RRU) 1201 and one or more baseband units (baseband unit, BBU) (which may also be referred to as a digital unit, digital unit, DU) 1202. The RRU 1201 may be referred to as a transceiver unit, a transceiver machine, a transceiver circuit, a transceiver, or the like, and may include at least one antenna 12011 and a radio frequency unit 12012. The RRU 1201 is partially configured to: perform radio frequency signal sending and receiving and perform conversion between a radio frequency signal and a baseband signal. The BBU 1202 is mainly configured to: perform baseband processing, control a base station, and the like. The RRU 1201 and the BBU 1202 may be physically disposed together, or may be physically disposed separately, that is, the base station is a distributed base station.

The BBU 1202 is a control center of the base station, may also be referred to as a processing unit, and is mainly configured to complete baseband processing functions such as channel encoding, multiplexing, modulation, and spectrum spreading. For example, the BBU (the processing unit) 1202 may be configured to control the base station to execute the operation procedure related to the network device in the foregoing method embodiments.

In an example, the BBU 1202 may include one or more boards. A plurality of boards may jointly support a radio access network (such as an LTE network) of a single access standard, or may separately support radio access networks (such as an LTE network, a 5G network, or another network) of different access standards. The BBU 1202 may further include a memory 12021 and a processor 12022. The memory 12021 is configured to store necessary instructions and data. The processor 12022 is configured to control the base station to perform a necessary action, for example, is configured to control the base station to perform a sending operation in the foregoing method embodiments. The memory 12021 and the processor 12022 may serve one or more boards. In other words, a memory and a processor may be disposed on each board. Alternatively, the plurality of boards may share a same memory and a same processor. In addition, a necessary circuit may further be disposed on each board.

An embodiment of this application further provides a chip system, including a processor, where the processor is coupled to a memory, and the memory is configured to store a program or instructions; and when the program or the instructions are executed by the processor, the chip system is enabled to implement the method corresponding to the terminal device or the method corresponding to the network device according to any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may also be one or more memories in the chip system. The memory may be integrated with the processor, or may be disposed independent of the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processing circuit (digital signal processor, DSP), a microcontroller unit (microcontroller unit, MCU), a programmable logic device (programmable logic device, PLD), or another integrated chip.

It should be understood that steps in the foregoing method embodiments may be implemented by using a hardware integrated logic circuit or instructions in a software form in the processor. The steps of the method disclosed with reference to embodiments of this application may be directly performed by a hardware processor, or may be performed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

An embodiment of this application further provides a communication system. The communication system includes a first network device and at least one terminal device. The first network device may be a source network device, may be a target network device, or may be another network device different from the source network device and the target network device. Optionally, the communication system may further include the source network device and the target network device. Optionally, the communication system may further include a core network device. The communication system includes the first network device, the terminal device, the source network device, the target network device, the core network device, and the like that may cooperate with each other to implement any one of the foregoing method embodiments. In addition, for a specific implementation in which the communication system includes the terminal device, refer to the foregoing descriptions of the communication apparatuses in FIG. 9 and FIG. 10. For a specific implementation of any one of the first network device, the source network device, the target network device, and the core network device, refer to the foregoing descriptions of the communication apparatuses in FIG. 11 and FIG. 12.

It should be understood that the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It may further be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that numbers in various embodiments of this application are only used for differentiation for ease of description. Sequence numbers of the foregoing processes or steps do not mean execution sequences. The execution sequences of the processes or steps should be determined based on functions and internal logic of the processes, and should not be construed as any limitation on the implementation processes of embodiments of the present invention.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are only examples. For example, division into the units is only logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing descriptions are only specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
failing to hand over in a process of attempting to hand over from a source network device to a target network device, wherein the source network device and the target network device are network devices using different communication standards;
generating a first report, wherein the first report comprises a container that comprises at least one piece of information related to the handover failure, and the container uses a coding format corresponding to a communication standard of the source network device; and
sending the first report to a first network device.

2. The method according to claim 1, wherein the first report further comprises first information, and the first information indicates that the first report is a report for an inter-RAT handover scenario.

3. The method according to claim 1 or 2, wherein the first report further comprises second information, and the second information indicates that the first report is a report for an inter-system handover scenario or a report for an intra-system handover scenario.

4. The method according to any one of claims 1 to 3, wherein the method further comprises:
sending first indication information to the first network device, wherein the first indication information indicates that a terminal device records the first report; and
receiving second indication information from the first network device, wherein the second indication information indicates the terminal device to report the first report.

5. A communication method, wherein the method comprises:
receiving a first report from a terminal device, wherein the first report comprises a container that comprises at least one piece of information related to a handover failure, the container uses a coding format corresponding to a communication standard of a source network device, the handover failure is a handover failure from the source network device to a target network device, and the source network device and the target network device are network devices using different communication standards; and
processing the first report.

6. The method according to claim 5, wherein the processing the first report comprises:
obtaining the container in the first report; and
sending a second report to the source network device, wherein the second report comprises the container.

7. The method according to claim 6, wherein the first report further comprises first information, and the first information indicates that the first report is a report for an inter-RAT handover scenario; and/or
the second report further comprises third information, and the third information indicates that the second report is a report for an inter-RAT handover scenario.

8. The method according to claim 6 or 7, wherein the first report further comprises second information, and the second information indicates that the first report is a report for an inter-system handover scenario or a report for an intra-system handover scenario; and/or
the second report further comprises fourth information, and the fourth information indicates that the second report is a report for an inter-system handover scenario or a report for an intra-system handover scenario.

9. The method according to any one of claims 5 to 8, wherein the method further comprises:
receiving first indication information from the terminal device, wherein the first indication information indicates that the terminal device records the first report; and
sending second indication information to the terminal device, wherein the second indication information indicates the terminal device to report the first report.

10. A communication method, wherein the method comprises:
a radio link failure occurs on a target network device shortly after a successful handover from a source network device to a target network device, or after a connection to a source network device for a period of time, a radio link failure occurs, wherein the source network device and the target network device are network devices using different communication standards;
generating a first report, wherein the first report comprises a first container that comprises at least one piece of information related to the radio link failure, and the first container uses a coding format corresponding to a communication standard of a network device to which a cell in which the radio link failure occurs belongs; and
sending the first report to a first network device.

11. The method according to claim 10, wherein when the radio link failure occurs on the target network device shortly after the successful handover from the source network device to the target network device, and the network device to which the cell in which the radio link failure occurs belongs is the target network device; and
the first report further comprises a second container that comprises the at least one piece of information related to the radio link failure, wherein the second container uses a coding format corresponding to a communication standard of the source network device.

12. The method according to claim 10 or 11, wherein the first report further comprises first information, and the first information indicates that the first report is a report for an inter-RAT handover scenario.

13. The method according to any one of claims 10 to 12, wherein the first report further comprises second information, and the second information indicates that the first report is a report for an inter-system handover scenario or a report for an intra-system handover scenario.

14. The method according to any one of claims 10 to 13, wherein the method further comprises:
sending first indication information to the first network device, wherein the first indication information indicates that a terminal device records the first report; and
receiving second indication information from the first network device, wherein the second indication information indicates the terminal device to report the first report.

15. A communication method, wherein the method comprises:
receiving a first report from a terminal device, wherein the first report comprises a first container that comprises at least one piece of information related to a radio link failure, and the first container uses a coding format corresponding to a communication standard of a network device to which a cell in which the radio link failure occurs belongs; and
sending a second report to the network device to which the cell in which the radio link failure occurs belongs, wherein the second report comprises the first container.

16. The method according to claim 15, wherein when the network device to which the cell in which the radio link failure occurs belongs is the target network device,
the first report further comprises a second container that comprises the at least one piece of information related to the radio link failure, wherein the second container uses a coding format corresponding to a communication standard of the source network device; and
the method further comprises:
sending the second container to the target network device.

17. The method according to claim 15 or 16, wherein the first report further comprises first information, and the first information indicates that the first report is a report for an inter-RAT handover scenario; and/or
the second report further comprises third information, and the third information indicates that the second report is a report for an inter-RAT handover scenario.

18. The method according to any one of claims 15 to 17, wherein the first report further comprises second information, and the second information indicates that the first report is a report for an inter-system handover scenario or a report for an intra-system handover scenario; and/or
the second report further comprises fourth information, and the fourth information indicates that the second report is a report for an inter-system handover scenario or a report for an intra-system handover scenario.

19. The method according to any one of claims 15 to 18, wherein the method further comprises:
receiving first indication information from the terminal device, wherein the first indication information indicates that the terminal device records the first report; and
sending second indication information to the terminal device, wherein the second indication information indicates the terminal device to report the first report.

20. A communication method, wherein the method comprises:
receiving a second report from a first network device, wherein the second report comprises a first container that comprises at least one piece of information related to a radio link failure, and the first container uses a coding format corresponding to a communication standard of a target network device;
determining, based on the second report, that handover is too early handover or handover to a wrong cell, and/or determining that a failure type is the radio link failure; and
sending a third report to a source network device, wherein the third report comprises a second container that comprises the at least one piece of information related to the radio link failure, the second container uses a coding format corresponding to a communication standard of the source network device, and the source network device and the target network device are network devices using different communication standards.

21. The method according to claim 20, wherein the method further comprises:
receiving the second container from the first network device; or
processing, based on the coding format corresponding to the communication standard of the source network device, the at least one piece of information that is related to the radio link failure and that is comprised in the first container, to obtain the second container.

22. The method according to claim 20 or 21, wherein the second report further comprises third information, and the third information indicates that the second report is a report for an inter-RAT handover scenario; and/or
the third report further comprises fifth information, and the fifth information indicates that the third report is a report for an inter-RAT handover scenario.

23. The method according to any one of claims 20 to 22, wherein the second report further comprises fourth information, and the fourth information indicates that the second report is a report for an inter-system handover scenario or a report for an intra-system handover scenario; and/or
the third report further comprises sixth information, and the sixth information indicates that the third report is a report for an inter-system handover scenario or a report for an intra-system handover scenario.

24. The method according to any one of claims 20 to 23, wherein the third report further comprises information indicating that the handover is too early handover or handover to a wrong cell.

25. A communication apparatus, wherein the apparatus comprises units configured to perform the steps of the method according to any one of claims 1 to 4, comprises units configured to perform the steps of the method according to any one of claims 5 to 9, comprises units configured to perform the steps of the method according to any one of claims 10 to 14, comprises units configured to perform the steps of the method according to any one of claims 15 to 19, or comprises units configured to perform the steps of the method according to any one of claims 20 to 24.

26. A communication apparatus, wherein the apparatus comprises at least one processor, and the at least one processor is coupled to at least one memory; and
the at least one processor is configured to execute a computer program or instructions stored in the at least one memory, so that the apparatus performs the method according to any one of claims 1 to 4, the apparatus performs the method according to any one of claims 5 to 9, the apparatus performs the method according to any one of claims 10 to 14, the apparatus performs the method according to any one of claims 15 to 19, or the apparatus performs the method according to any one of claims 20 to 24.

27. A computer-readable storage medium, configured to store instructions, wherein when the instructions are executed, the method according to any one of claims 1 to 4 is implemented, the method according to any one of claims 5 to 9 is implemented, the method according to any one of claims 10 to 14 is implemented, the method according to any one of claims 15 to 19 is implemented, or the method according to any one of claims 20 to 24 is implemented.

28. A communication apparatus, comprising a processor and an interface circuit, wherein
the interface circuit is configured to exchange code instructions with the processor; and
the processor is configured to run the code instructions to perform the method according to any one of claims 1 to 4, the processor is configured to run the code instructions to perform the method according to any one of claims 5 to 9, the processor is configured to run the code instructions to perform the method according to any one of claims 10 to 14, the processor is configured to run the code instructions to perform the method according to any one of claims 15 to 19, or the processor is configured to run the code instructions to perform the method according to any one of claims 20 to 24.

29. A computer program product, wherein when a computer reads and executes the computer program product, the computer is enabled to perform the method according to any one of claims 1 to 4, perform the method according to any one of claims 5 to 9, perform the method according to any one of claims 10 to 14, perform the method according to any one of claims 15 to 19, or perform the method according to any one of claims 20 to 24.
